# EUROPEAN PATENT APPLICATION

(11) **EP 4 424 752 A1**
(43) Date of publication of application: **04.09.2024**
(21) Application number: 22887210.7
(22) Date of filing: 28.10.2022
(51) Int. Cl.: C08H 7/00, C07G 1/00

(54) **WHITE LIGNIN, WHITE LIGNIN-POLYSACCHARIDE COMPLEX, AND METHOD FOR PRODUCING SAME**

(30) Priority: 29.10.2021 JP 2021178335
(71) Applicant: Kyoto University, Kyoto-shi, Kyoto 606-8501 (JP)
(72) Inventor: NISHIMURA, Hiroshi, Kyoto-shi, Kyoto 606-8501 (JP); SANO, Mei, Kyoto-shi, Kyoto 606-8501 (JP); MIZUKOSHI, Yoshiteru, Kyoto-shi, Kyoto 606-8501 (JP)
(74) Representative: Vossius & Partner Patentanwälte Rechtsanwälte mbB
(86) International application number: PCT/JP2022/040569
(87) International publication number: WO 2023/074885

(57) **Abstract**

Provided are white lignin, a white lignin-polysaccharide complex, and methods for producing the same.

A method for producing white lignin or a white lignin-polysaccharide complex, including: (a) a step of bringing a plant biomass into contact with an alkaline solution to obtain an alkali-treated material; (b) a step of washing the alkali-treated material with a liquid to obtain a washed material; and (c) a step of bringing a solution containing an organic acid into contact with the washed material.

## Description

### Technical Field

The present invention relates to white lignin, a white lignin-polysaccharide complex, and methods for producing the same.

### Background Art

Lignin, together with polysaccharides (cellulose and hemicelluloses), is a major component constituting the cell walls of plant bodies of plants. Lignin has attracted attention as a naturally occurring, abundant aromatic polymer. At present, lignin is mainly obtained as a by-product in the manufacturing process of paper pulp or the manufacturing process of bioethanol. Due to their denatured form, it is difficult to increase the functionality of these isolated lignins. Thus, studies suggest various methods for isolating lignin while avoiding denaturation as much as possible (PTL 1).

Lignin is generally colored in brown or black. For this reason, lignin cannot be used in a field where coloring or mixing of brown or black is avoided. In order to solve such a problem, Patent Document 2 discloses a technique in which lignin is purified and then decolorized. However, this technique is complicated in process and causes conversion of the chemical structure of lignin.

### Citation List

### Patent Literature

PTL 1: JP2013-241391A
PTL 2: JP2021-017582A

### Summary of Invention

### Technical Problem

A challenge of the present invention is to provide white lignin, a white lignin-polysaccharide complex, and methods for producing the same.

### Solution to Problem

As a result of intensive studies in view of the above problems, the present inventors conceived extracting lignin in the reverse order of wood biosynthesis as a new method for isolating lignin, and have found that lignin in a state close to natural lignin can be obtained by the method. As a result of further research based on this finding, the present inventors have found that white lignin or a white lignin-polysaccharide complex can be obtained by a method including (a) a step of bringing a plant biomass into contact with an alkaline solution to obtain an alkali-treated material; (b) a step of washing the alkali-treated material with a liquid to obtain a washed material; and (c) a step of bringing a solution containing an organic acid into contact with the washed material. It has been found that white lignin or a white lignin-polysaccharide complex is a conventionally unknown high-purity concentrate of a specific part, and has an extremely characteristic molecular structure, higher order structure, light scattering characteristics, light transmission characteristics, and self-assembling ability. The present inventors have conducted studies on the basis of the above findings and have accomplished the present invention. That is, the present invention includes the following embodiments.

Item 1. A method for producing white lignin or a white lignin-polysaccharide complex, including:
(a) a step of bringing a plant biomass into contact with an alkaline solution to obtain an alkali-treated material;
(b) a step of washing the alkali-treated material with a liquid to obtain a washed material; and
(c) a step of bringing a solution containing an organic acid into contact with the washed material.

Item 2. The method according to item 1, in which the organic acid solution contains a peracid.

Item 3. The method according to item 1 or 2, in which the alkaline solution is at 70°C or lower.

Item 4. The method according to any one of items 1 to 3, including irradiating the plant biomass with ultrasonic waves or microwaves in the step (a).

Item 5. The method according to any one of items 1 to 4, in which the liquid contains water.

Item 6. The method according to any one of items 1 to 4, in which the organic acid solution is at 60°C or lower.

Item 7. The method according to any one of items 1 to 6, including irradiating the washed material with ultrasonic waves or microwaves in the step (c).

Item 8. The method according to any one of items 1 to 7, including (d) a step of adding a first solvent after the step (c) to obtain a solution containing white lignin or a white lignin-polysaccharide complex.

Item 9. The method according to item 8, including (e) a step of adding a second solvent to a concentrate of the solution containing the white lignin and/or the white lignin-polysaccharide complex to extract the white lignin.

Item 10. The method according to any one of items 1 to 9, in which the white lignin and/or the white lignin-polysaccharide complex has a Hunter's whiteness (W) of 60 or greater.

Item 11. The method according to any one of items 1 to 10, in which the organic acid solution is at 100°C or lower, the method including a step of obtaining a white lignin-containing solution.

Item 12. The method according to any one of items 1 to 10, in which the organic acid solution is above 100°C, the method including a step of obtaining a white lignin-polysaccharide complex-containing solution.

Item 13. White lignin having a Hunter's whiteness (W) of 60 or more and a content of a β-O-4 ether type structure of 50% or more.

Item 14. White lignin obtainable by the method according to item 11.

Item 15. White lignin having a Hunter's whiteness (W) of 60 or more and a ratio of oxidized lignin structures of 0.3 or less.

Item 16. A white lignin-polysaccharide complex having a Hunter's whiteness (W) of 60 or more and containing at least one bond selected from the group consisting of an α-ether bond between lignin and a polysaccharide, an α-ester bond between lignin and a polysaccharide, and a γ-ester bond between lignin and a polysaccharide.

Item 17. White lignin having 6 or more, desirably 8 or more, more desirably 10 or more, and particularly desirably 12 or more peaks in total among peaks in a first derivative spectrum of an infrared absorption spectrum with hardwood, characterized by having positive peaks (convex upward) at 1007 to 1017 cm-, 1072 to 1082 cm⁻¹, 1108 to 1118 cm⁻¹, 1148 to 1154 cm⁻¹, 1179 to 1183 cm⁻¹, 1204 to 1210 cm⁻¹, 1257 to 1265 cm⁻¹, 1317 to 1321 cm⁻¹, and 2893 to 2921 cm⁻¹ and negative peaks (convex downward) at 1035 to 1041 cm⁻¹, 1130 to 1134 cm⁻¹, 1160 to 1167 cm⁻¹, and 1331 to 1337 cm⁻¹.

Item 18. White lignin having 4 or more, desirably 6 or more, more desirably 8 or more, and particularly desirably 10 or more peaks in total among peaks in a first derivative spectrum of an infrared absorption spectrum with softwood, characterized by having positive peaks (convex upward) at 1010 to 1035 cm⁻¹, 1070 to 1088 cm⁻¹, 1112 to 1126 cm⁻¹, 1198 to 1212 cm⁻¹, 1250 to 1261 cm⁻¹, and 1360 to 1365 cm⁻¹ and negative peaks (convex downward) at 1033 to 1047 cm⁻¹, 1144 to 1148 cm⁻¹, 1161 to 1171 cm⁻¹, 1226 to 1244 cm⁻¹, and 1270 to 1290 cm⁻¹.

Item 19. White lignin having 3 or more, desirably 4 or more peaks, and more desirably 5 or more peaks in total among peaks in a first derivative spectrum of an infrared absorption spectrum with herbaceous plants, characterized by having positive peaks (convex upward) at 1005 to 1011 cm⁻¹, 1055 to 1072 cm⁻¹, 1072 to 1082 cm⁻¹, and 1109 to 1126 cm⁻¹ and negative peaks (convex downward) at 1030 to 1041 cm⁻¹ and 1128 to 1136 cm⁻¹.

Item 20. White lignin or a white lignin-polysaccharide complex soluble in deuterated acetic acid having an NMR-DMSO-based solubility index of 50 or more, preferably 60 or more, more preferably 80 or more, and more desirably 100 or more, or
white lignin or a white lignin-polysaccharide complex soluble in deuterated ethanol having an NMR-DMSO-based solubility index of 30 or more, preferably 40 or more, more preferably 50 or more, and more desirably 60 or more.

Item 21. A white lignin-polysaccharide complex obtainable by the method according to item 12.

Item 22. A self-assembled body of the white lignin according to any one of items 13 to 15 and 17 to 20 and/or the white lignin-polysaccharide complex according to any one of items 17 and 20 to 21.

Item 23. The self-assembled body according to item 22, in which the self-assembled body is hollow spherical particles.

Item 24. The self-assembled body according to item 22, in which the self-assembled body is fine particles having an average particle size of from 30 nm to 5000 nm, particularly nanoparticles having an average particle size of from 40 nm to 500 nm.

Item 25. The self-assembled body according to item 22, in which the fine particle has anti-Stokes fluorescence.

Item 26. Fine particles being the self-assembled body according to item 24 or item 22, in which the fine particles are dispersible in water and have a zeta potential having a large absolute value (-20 mV or higher, especially from -60 mV to -100 mV).

Item 27. White lignin, a white lignin-polysaccharide complex, and/or a self-assembled body that contribute to use for reflection, absorption, scattering agent, or the like of ultraviolet rays.

### Advantageous Effects of Invention

In accordance with the present invention, it is possible to provide white lignin, a white lignin-polysaccharide complex, and methods for producing the same.

### Brief Description of Drawings

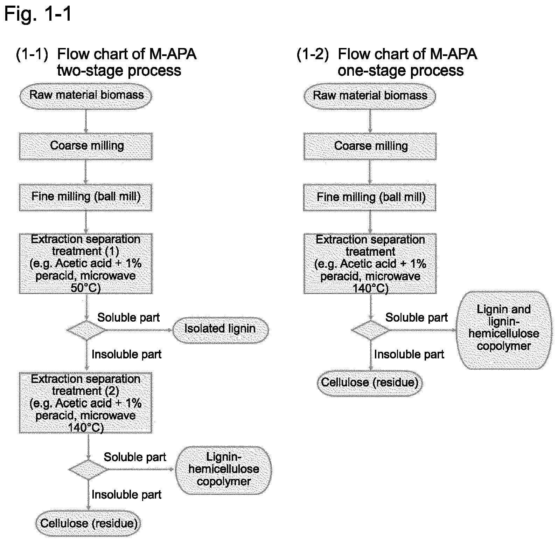

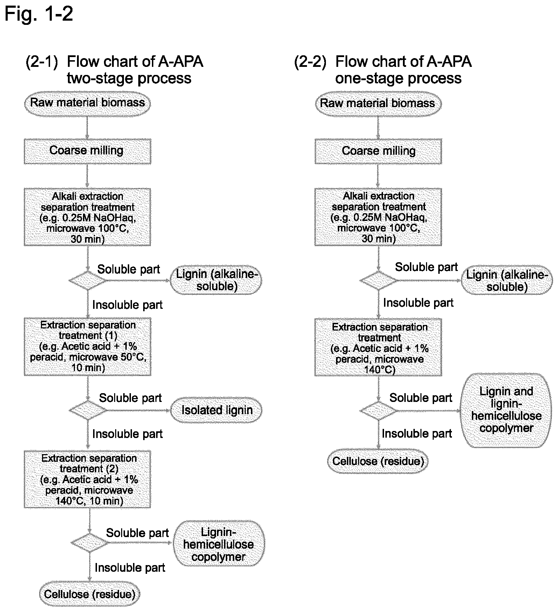

Fig. 1-1 is a diagram showing a flow chart of an M-APA method.
Fig. 1-2 is a diagram showing a flow chart of an A-APA method.
Fig. 2 is a diagram showing microwave irradiation conditions for isolating lignocellulose components, power, temperature, pressure profile; and device specifications: Initiator+ 60 microwave synthesizer manufactured by Biotage, stirring speed: 600 rp, Cooling: On, Absorption: High.
Fig. 3 is a two-dimensional NMR spectrum of a low-modified, high-purity lignin with a high ether-type content. This is a result of analysis of lignin isolated according to the M-APA method (microwave treatment at 50°C for 10 minutes with acetic acid peracetic acid 1%) using *eucalyptus* as a starting material.
Fig. 4 shows the partial chemical structures of lignin interunit bonds and covalent bonds between lignin and hemicelluloses.
Fig. 5 shows two-dimensional NMR spectra a to d of lignin-hemicellulose copolymers, and enlarged views a' to d' of interunit bonds and saccharide regions. Lignin-hemicellulose copolymers obtained from hardwood (a, b) and softwood (c, d) according to the M-APA method were analyzed. The circles in the figure indicate LC bonds (ether type and ester type).

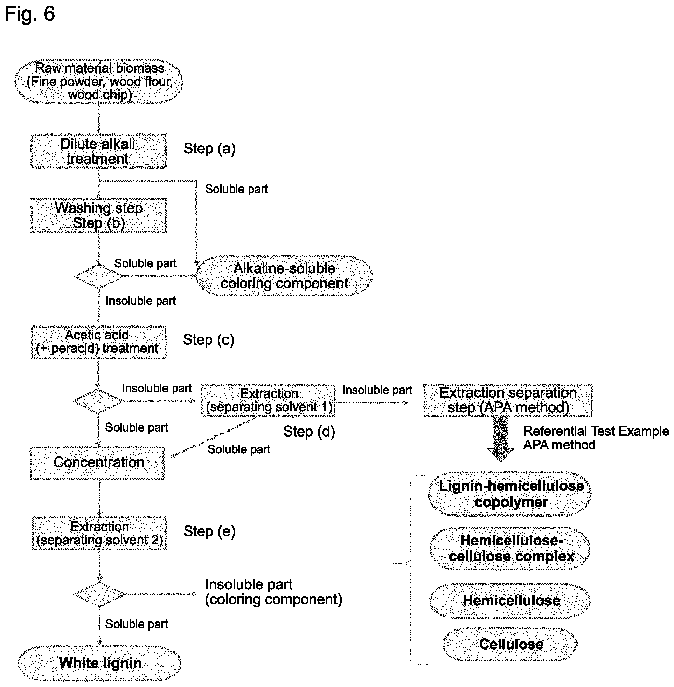

Fig. 6 shows one example of a scheme of the production of white lignin.

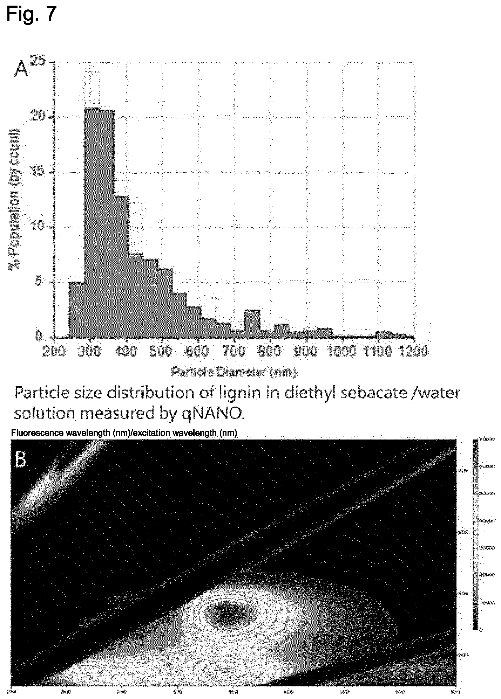

Fig. 7 shows [A] a particle size distribution of lignin fine particles derived from Eucalyptus in a diethyl sebacate/water solution (4 : 3) measured by qNANO and [B] a 3D fluorescence spectrum. The average particle system was 436 nm ± 16 nm and the mode particle size was 304 nm [A] in the measurement by qNANO, and the average particle system was 462 nm ± 27 nm and the mode particle size was 459 nm ± 23 nm in the measurement by dynamic light scattering (manufactured by DLS Horiba, Ltd.). Self-assembly resulted in distinct long wavelength fluorescence (Ex: 380 nm, Em: around 440 nm) [B]. Lignin fine particles capable of being well dispersed in water by use of diethyl sebacate, which is common as a low toxic cosmetic base material, were obtained. Pickering emulsion was also found.

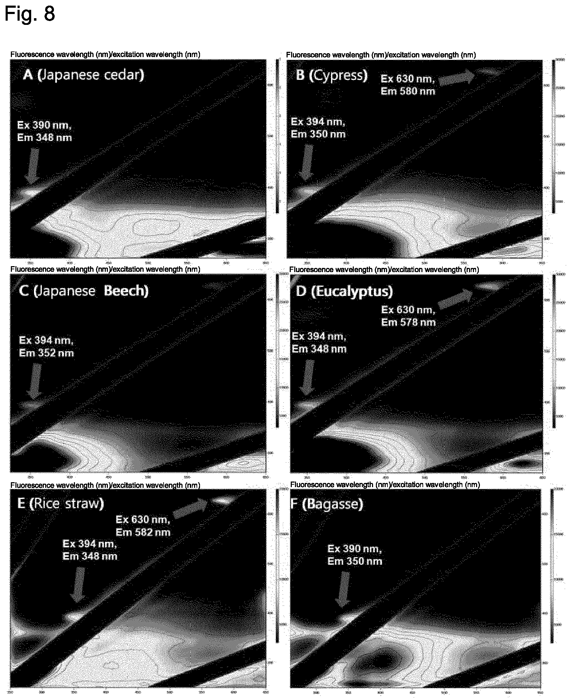

Fig. 8: 3D fluorescence spectra A to D of a white lignin nanoparticle. There are long wavelength fluorescence (400 nm to 550 nm) and characteristic anti-Stokes fluorescence (Ex 394 nm, Em 352 nm), (Ex 630 nm, Em 578 nm). The raw materials are, respectively, A softwood Japanese cedar-derived white lignin, B softwood cypress-derived white lignin, C hardwood Japanese beech-derived white lignin, D hardwood eucalyptus-derived white lignin, E herbaceous plant rice straw-derived white lignin, and F herbaceous plant sugarcane bagasse-derived white lignin.
Fig. 9 shows a reflectance spectrum by a diffuse reflection method. 1) White lignin (derived from hardwood eucalyptus), 2) commercially available titanium dioxide powder (Nippon Aerosil Co., Ltd., P25), 3) commercially available lignin reagent (Nacalai Tesque, Inc., alkaline lignin), 4) oxybenzone-3 (Tokyo Chemical Industry Co., Ltd., 2-hydroxy-4-methoxybenzophenone)
Fig. 10 shows differential spectra obtained in Test Example 1-6. The raw material is indicated on the upper right of each spectrum.
Fig. 11 shows differential spectra obtained in Test Example 1-6. The raw material is indicated on the upper right of each spectrum.
Fig. 12 shows differential spectra obtained in Test Example 1-6. The raw material is indicated on the upper right of each spectrum.
Fig. 13 shows differential spectra obtained in Test Example 1-6. The raw material is indicated on the upper right of each spectrum.
Fig. 14 shows differential spectra obtained in Test Example 1-6. The raw material is indicated on the upper right of each spectrum.

### Description of Embodiments

In the present specification, the terms "comprise", "contain", and "include" include the concepts of comprising, containing, including, consisting essentially of, and consisting of.

### 1. Method for producing white lignin or white lignin-polysaccharide complex

The present invention relates, in one embodiment thereof, to a method for producing white lignin or a white lignin-polysaccharide complex, including: (a) a step of bringing a plant biomass into contact with an alkaline solution to obtain an alkali-treated material; (b) a step of washing the alkali-treated material with a liquid to obtain a washed material; and (c) a step of bringing a solution containing an organic acid into contact with the washed material (in the present description, this method is sometimes referred to as "the production method of the present invention"). The details are described below.

The plant biomass is not particularly limited as long as it contains lignin and/or a lignin-polysaccharide complex, and examples thereof include a plant body itself and a mechanically processed product of a plant body. The plant biomass usually contains at least one selected from the group consisting of hemicellulose and cellulose in addition to lignin and/or a lignin-polysaccharide complex, and preferably contains lignin, hemicellulose, a lignin-polysaccharide complex, a cellulose-hemicellulose complex, and cellulose.

Examples of the plant body include softwood materials, hardwood materials, and non-wood materials. Specific examples include softwood materials of, for example, Japanese cedar, pine, *Picea jezoensis, Larix kaempferi, Pinus thunbergii, Abies sachalinensis, Pinus parviflora, Taxus cuspidata, Thuja standishii, Picea polita, Picea alcokiana, Podocarpus macrophyllus, Abies firma, Chamaecyparis pisifera, Pseudotsuga japonica, Thujopsis dolabrata* var. *dolabrata, Thujopsis dolabrata* var. *hondae, Tsuga sieboldii, Tsuga diversifolia,* cypress, *Taxus cuspidata, Cephalotaxus harringtonia, Picea jezoensis* var. *hondoensis,* yellow cedar *(Callitropsis nootkatensis),* Lawson cypress *(Chamaecyparis lawsoniana),* Douglas fir *(Pseudotsuga menziesii),* Sitka spruce *(Picea sitchensis), Pinus radiata,* eastern spruce, eastern white pine, western larch, western fir, western hemlock, and tamarack; hardwood materials of, for example, *Populus Tremuloides,* American black cherry, *Liriodendron tulipifera,* walnut, kaba-zakura, *Zelkova serrata,* sycamore, silver cherry, *Fraxinus mandshurica, Tectona grandis,* Chinese elm, Chinese maple, *Quercus,* Japanese beech, hard maple, hickory, *Carya illinoinensis, Fraxinus americana,* white oak, white birch, red oak, acacia, and eucalyptus; and non-wood materials of, for example, *Oryza sativa,* sugarcane, barley, wheat, maize, pineapple, oil palm, *Hibiscus cannabinus,* cotton, alfalfa, *Phleum pratense*, bamboo, *Sasa*, bamboo, and sugar beet.

Examples of the mechanically processed product of a plant body include logs, rectangular lumbers, boards, solid wood, wood materials, engineered wood, laminated veneer lumbers, plywood, wooden board, particle board, fiber board, wood chips, particulate wood materials (e.g., chips, particles, and wood flour), fibrous wood materials, compressed materials, and crushed materials.

In one embodiment of the present invention, the plant biomass may be wood flour. The volume average particle size of the wood flour is, for example, 500 um or less, 200 µm or less, or 100 um or less. The lower limit of the average particle size may be any value and can be, for example, 1 µm, 2 um, or 5 um. Wood flour can be obtained by pulverizing plant biomass. Pulverization can be performed following or in accordance with known methods, for example, by using various types of mills (e.g., ball mills and mixer mills).

Plant biomasses can be used singly or in a combination of two or more.

In the step (a), the plant biomass and the alkaline solution are brought into contact with each other to afford an alkali-treated material. The step (a) can improve the yield by causing loosening of the plant cell wall structure (reducing intermolecular interactions and cleaving hydrogen bonds) and by cleaving intramolecular ester bonds. In addition, a coloring component of lignin can be efficiently removed by a combination of the step (a) and the step (b) described later.

The alkaline solution may be any alkaline solution as long as the above object can be achieved. For example, the alkaline solution can be a solution with a pH of 12 to 15. The pH of the solution is preferably 13 to 14. The alkaline solution can also be, for example, a solution containing 0.2 to 2 mass% (preferably 0.7 to 1.5 mass%) of an alkali metal hydroxide (sodium hydroxide, potassium hydroxide, etc.). The concentration of the alkali metal hydroxide is preferably 0.1 to 0.3 M.

The amount of the alkaline solution for use may be any amount as long as the above object can be achieved. The alkaline solution can be used in an amount of, for example, 3 to 20 mL, and preferably 5 to 12 mL, per 1 g of the plant biomass.

The contact mode between the plant biomass and the alkaline solution may be any mode. From the viewpoint of, for example, treatment efficiency, it is preferable to immerse the plant biomass in the alkaline solution.

The temperature of the alkaline solution may be any temperature as long as the above object can be achieved. The temperature of the alkaline solution is preferably a relatively low temperature, and is, for example, 70°C or lower, preferably 60°C or lower, more preferably 50°C or lower, still more preferably 10 to 50°C, further preferably 20 to 50°C, and particularly preferably 30 to 50°C.

From the viewpoint of being able to further improve the whiteness of the resulting lignin and/or lignin-polysaccharide complex, it is preferable to irradiate the plant biomass with ultrasonic waves or microwaves in the step (a). The conditions for microwave treatment can be set as appropriate. For example, a commercially available microwave synthesizer can be used while stirring the solution. In addition, conditions of the ultrasonic treatment may be appropriately set, and for example, the ultrasonic treatment can be performed using a commercially available ultrasonic irradiation device. The output conditions of the microwaves and the ultrasonic waves can be set to such conditions that the temperature of the alkaline solution can maintain the above-described temperature.

The treatment time in step (a) is not particularly limited as long as the above object can be achieved. The treatment time is, for example, 5 to 100 minutes, preferably 15 to 70 minutes, and more preferably 20 to 40 minutes.

By ultrasonic irradiation, pressure change (pressurization, depressurization, and repetition thereof), microwave irradiation, and generation of nanobubbles for effectively promoting penetration of the alkaline liquid into a plant cell structure, and dispersion and movement of the extraction component, alkali swelling in a short time (an effect of swelling cell walls by loosening packing between polymer chains in a plant cell wall, partial cleavage of hydrogen bonds, and partial cleavage of ester bonds) and an effect of extracting a coloring component can be efficiently obtained.

A decrease in the solid-liquid interfacial tension of the alkaline liquid and an improvement in wettability are also effective. Those can be attained by the addition of a hydrophilic organic solvent (e.g., ethanol) or a surfactant.

After the contact treatment between the plant biomass and the alkaline solution, a solid-liquid separation treatment (centrifugation, filtration, standing, etc.) is performed as necessary to afford an insoluble part (alkali-treated material). The alkali-treated material is subjected to the step (b).

In the step (b), the alkali-treated material is washed with a liquid to afford a washed material. By the combination of the step (a) and the step (b) described above, a coloring component of lignin can be efficiently removed.

The liquid to be used for washing is not particularly limited as long as it contains a solvent capable of removing the coloring component of lignin. From the viewpoint of the efficiency of removing the coloring component, the liquid preferably includes water. The content of the water in the liquid is preferably 20 mass% or more, more preferably 40 mass% or more, still more preferably 60 mass% or more, further preferably 80 mass% or more, and particularly preferably 90 mass% or more, and the liquid is particularly preferably water.

The method for washing with a liquid is not particularly limited. For example, the alkali-treated material can be washed by mixing it with the liquid, and then subjecting the mixture to solid-liquid separation to collect an insoluble part. The washing operation is preferably repeated a plurality of times. From the viewpoint of further increasing the whiteness of the lignin and/or lignin-polysaccharide complex to be obtained, it is preferable to perform washing until the washing waste liquid reaches a neutral range (e.g., pH 6.5 to 8.0, preferably pH 6.5 to 7.5).

The insoluble part (washed material) obtained after completion of the washing operation is subjected to the step (c).

In the step (c), a solution containing an organic acid is brought into contact with the washed material.

The organic acid solution is a solution containing the organic acid and being capable of extracting and solubilizing lignin and/or a lignin-polysaccharide complex, and is not particularly limited as long as this definition is satisfied.

Examples of the organic acid include, but are not limited to, acetic acid, formic acid, glyoxylic acid, maleic acid, propionic acid, folic acid, isobutyric acid, valeric acid, isovaleric acid, pyruvic acid, oxalic acid, malonic acid, succinic acid, glutaric acid, ketoglutaric acid, adipic acid, lactic acid, tartaric acid, fumaric acid, oxaloacetic acid, malic acid, isocitric acid, citric acid, benzoic acid, phthalic acid, isophthalic acid, terephthalic acid, hemimellitic acid, trimellitic acid, trimesic acid, mellophanic acid, prehnitic acid, pyromellitic acid, mellitic acid, methanesulfonic acid, benzenesulfonic acid, p-toluenesulfonic acid, camphorsulfonic acid, p-toluenesulfinic acid, and benzenesulfinic acid. Among these, preferred are acetic acid, formic acid, glyoxylic acid, 3-oxopropanoic acid, 2-methyl-3-oxopropanoic acid, and the like, more preferred are acetic acid, formic acid, glyoxylic acid, and the like, and particularly preferred is acetic acid.

The organic acids can be used singly or in a combination of two or more.

From the viewpoint of the yield of the white lignin and/or the white lignin-polysaccharide complex, the organic acid solution preferably contains a peracid.

The peracid may be any acid that contains a hydroperoxide group (-O-OH). Examples of peracids include organic peroxo acids such as percarboxylic acid, and persulfuric acid, percarbonic acid, perphosphoric acid, and peroxo-perhalogenic acid. Examples of percarboxylic acids include peracetic acid, performic acid, perbenzoic acid, and metachloroperbenzoic acid. Examples of peroxo-perhalogenic acid include peroxo-perchloric acid, peroxo-perbromic acid, and peroxo-periodic acid. In addition to the above, examples of peracids include hydrogen peroxide, lithium peroxide, sodium peroxide, potassium peroxide, sodium percarbonate, urea peroxide, sodium perborate, tert-butyl hydroperoxide, cumene hydroperoxide, di-tert-butyl peroxide, dimethyldioxirane, acetone peroxide, methyl ethyl ketone peroxide, and hexamethylene triperoxide diamine. Among these, preferred are organic peroxo acids, hydrogen peroxide, sodium percarbonate, urea peroxide, sodium perborate, and the like, more preferred are percarboxylic acids (in particular, peracetic acid), hydrogen peroxide, and the like, and particularly preferred is hydrogen peroxide.

The peracids can be used singly or in a combination of two or more.

The content of the organic acid in the organic acid solution is, for example, 5 to 30 mol/L, preferably 8 to 25 mol/L, and more preferably 10 to 20 mol/L. The content of the organic acid in the organic acid solution is preferably 3 to 10 g, more preferably 4 to 8 g, and even more preferably 5 to 7 g, per 1 g of the washed material to be brought into contact with the organic acid solution. The content of the organic acid in the organic acid solution is preferably 50 to 100 mass%.

When the organic acid solution contains a peracid, the content of the peracid in the organic acid solution is, for example, 0.05 to 3 mol/L, preferably 0.08 to 2.5 mol/L, and more preferably 0.1 to 2 mol/L. The content of the peracid in the organic acid solution is preferably 0.03 to 0.10 g, more preferably 0.04 to 0.08 g, and still more preferably 0.05 to 0.07 g, per 1 g of the washed material to be brought into contact with the organic acid solution. When the organic acid solution contains a peracid, the content of the peracid in the organic acid solution is preferably 0.1 to 10%, more preferably 0.3 to 5%, and still more preferably 0.6 to 2%.

The contact mode between the washed material and the organic acid solution is not particularly limited, but from the viewpoint of treatment efficiency and so on, it is preferable to immerse the washed material in the organic acid solution. From the viewpoint of the whiteness of the lignin and/or the lignin-polysaccharide complex to be obtained, it is preferable that the step (c) is performed in an inert gas or a gas atmosphere other than oxygen (in other words, the gas that comes in contact with the organic acid solution is an inert gas or a gas other than oxygen). Examples of such a gas include nitrogen, rare gas, and hydrogen.

By setting the temperature of the organic acid solution to 100°C or lower, a high-quality (low-condensation) lignin with a high content of the β-O-4 ether type structure among all of the binding modes between monolignols can be obtained. In this case, the temperature of the organic acid solution is preferably 90°C or lower, more preferably 70°C or lower, and still more preferably 60°C or lower. The lower limit of the temperature is, for example, 15°C, preferably 30°C, and more preferably 40°C.

By setting the temperature of the organic acid solution to higher than 100°C, a high-quality lignin-polysaccharide complex can be obtained. In this case, the temperature of the organic acid solution is preferably 160°C or lower, and more preferably 150°C or lower. The lower limit of the temperature is, for example, 105°C, preferably 110°C, and more preferably 115°C.

In one embodiment of the present invention, the step (c) is performed with an organic acid solution at 100°C or lower and white lignin is obtained from the resulting soluble part, and on the other hand, the resulting insoluble part is subjected to the step (c) with an organic acid solution having a temperature of higher than 100°C, whereby a white lignin-polysaccharide complex can be obtained from the resulting soluble part.

The treatment time in the step (c) is not limited as long as the above object can be achieved. The treatment time is, for example, 1 to 60 minutes, preferably 1 to 30 minutes, and more preferably 5 to 20 minutes. In addition, in the case of obtaining a lignin-polysaccharide complex, by setting the treatment time to be relatively short, for example, 15 minutes or less, preferably 10 minutes or less, and more preferably 5 minutes or less, the whiteness of the target product can be further increased.

In the step (c), it is preferable that microwave treatment is performed while the biomass is immersed in the solution. This improves the yield of the lignin and/or the lignin-polysaccharide complex. The conditions for microwave treatment can be set as appropriate. For example, a commercially available microwave synthesizer can be used while stirring the solution. The microwave treatment time can be, for example, 1 to 30 minutes, and preferably about 10 minutes. The isolation method of the present invention can also easily be constructed as a continuous system as well as a batch system, since the microwave treatment, when performed, requires only a relatively short irradiation time.

In the step (c), it is preferable to irradiate the plant biomass with microwaves or ultrasonic waves from the viewpoint of being able to promote penetration of the solution into the internal pits inside the plant cell wall and being able to increase the yield. The irradiation conditions are the same as those described above.

By ultrasonic irradiation, pressure change (pressurization, depressurization, and repetition thereof), microwave irradiation, generation of nanobubbles, and generation of cavitation for effectively promoting penetration of the organic acid solution into a plant cell structure, an effect of extracting a coloring component in a short time can be efficiently obtained.

A decrease in the solid-liquid interfacial tension of the organic acid solution and an improvement in wettability are also effective. Those can be attained by the addition of a hydrophilic organic solvent (e.g., ethanol) or a surfactant.

After the step (c), a separating solvent is added as necessary, and then the soluble part and the insoluble part are separated. The method of separating the soluble part from the insoluble part may be any method. Examples of usable methods include decantation, spin-down, and filtration. When no separating solvent is added, and when a solvent having a relatively low water content ratio or containing no water (a solvent having a water content ratio of, for example, 0 to 50 mass%, preferably 0 to 30 mass%, more preferably 0 to 20 mass%, still more preferably 0 to 10 mass%, and particularly preferably 0 to 5 mass%) is added as the separating solvent, the soluble part contains white lignin or a white lignin-polysaccharide complex. On the other hand, when a solvent having a relatively high water content ratio (a solvent having a water content ratio of, for example, more than 50 and up to 100 mass%, preferably 70 to 100 mass%, more preferably 80 to 100 mass%, still more preferably 90 to 100 mass%, and particularly preferably 95 to 100 mass%) is added as the separating solvent, the insoluble part contains white lignin or a white lignin-polysaccharide complex.

The separating solvent may be dioxane, ethanol, acetone, acetonitrile, DMSO, DMF, NMI, ethyl acetate, methanol, butanol, various other alcohols, acetic acid, water, and mixed solvents thereof. By using these, lignin and lignin-hemicellulose copolymers are separated. From the viewpoint of extraction efficiency, selectivity, and environmental load, a mixed solvent of an organic solvent represented by ethanol, dioxane, acetone, acetonitrile, and so on with water is preferable.

In one embodiment of the production method of the present invention, the method preferably includes (d) a step of, after the step (c), adding a first solvent to obtain a solution containing white lignin and/or a white lignin-polysaccharide complex.

The first solvent is not particularly limited, and examples thereof include the separating solvent described above. In particular, at least one solvent (particularly preferably ethanol) and a mixed solvent selected from the group consisting of ethanol, methanol, acetone, acetonitrile, propanol, and water are preferable as the first solvent.

After adding the first solvent and, as necessary, mixing, the soluble part and the insoluble part are separated. The method of separating the soluble part from the insoluble part is not particularly limited. For example, such methods as decantation, spin-down, and filtration can be adopted, and a solution containing white lignin and/or a white lignin-polysaccharide complex is thereby obtained.

When the production method of the present invention includes the step (d), it is preferable from the viewpoint of further increasing the whiteness of the lignin and/or the lignin-polysaccharide complex to be obtained that the method includes (e) a step of adding a second solvent to the concentrate of the solution containing the white lignin and/or the white lignin-polysaccharide complex to extract the white lignin and/or the white lignin-polysaccharide complex.

The concentrate of the solution containing the white lignin and/or the white lignin-polysaccharide complex is not particularly limited as long as the concentrate is one resulting from evaporation of a part or the entire of the solvent of the solution containing the white lignin and/or the white lignin-polysaccharide complex. The concentrate is preferably a dried product.

The second solvent is not particularly limited, and examples thereof include the separating solvent described above. In particular, a mixed solvent of water with at least one organic solvent (particularly preferably dioxane) selected from the group consisting of dioxane, acetone, acetonitrile, allyl alcohol, propanol, 1-butanol, 2-methyl-1-propanol, 2-butanol, ethyl acetate, and pyridine is preferable as the second solvent. The content of the organic solvent in the mixed solvent is, for example, 60 to 95 mass%, preferably 70 to 90 mass%, and more preferably 75 to 85 mass%.

The white lignin and/or the white lignin-polysaccharide complex is extracted by adding the second solvent and, as necessary, mixing. Thereafter, the obtained extract (soluble part) and the insoluble part are separated. The method of separating the soluble part from the insoluble part may be any method. Examples of usable methods include decantation, spin-down, and filtration.

After the step (c), by concentrating and drying the soluble part obtained as described above, a solid white lignin and/or a solid white lignin-polysaccharide complex can be obtained.

The production method of the present invention can afford white lignin and/or a white lignin-polysaccharide complex by inhibiting decomposition and molecular weight reduction of lignin while inhibiting a reaction (oxidation reaction, over-decomposition, condensation, Maillard reaction, and coloring reaction of lignin) that causes color development in the process of extraction and separation.

### 2. White lignin

In accordance with the production method of the present invention, in one embodiment, it is possible to obtain white lignin having at least the features of having a Hunter's whiteness (W) of 60 or more and a content of a β-O-4 ether type structure of 50% or more.

In accordance with the production method of the present invention, in one embodiment, it is possible to obtain white lignin having at least the features of having a Hunter's whiteness (W) of 60 or more and a ratio of oxidized lignin structures of 0.3 or less.

The white lignin of the present invention has a Hunter's whiteness (W) of 60 or more. The Hunter's whiteness is measured and calculated in accordance with the method described in Test Example 1-3 described later. The Hunter's whiteness (W) of the white lignin of the present invention is preferably 70 or more, more preferably 75 or more, still more preferably 80 or more, and further preferably 85 or more. The upper limit of the Hunter's whiteness (W) is not particularly limited, and is, for example, 98, 95, or 92. In addition, since white in the present invention is derived from the total reflection of light, the solution dissolution state is transparent. In addition, it has a characteristic that its mixture with a transparent resin and a paint can also be made transparent.

The white lignin of the present invention is lignin in a state isolated from biomass (including natural lignin). The binding modes in natural lignin are diverse. Representative examples of the binding modes in natural lignin include the following.

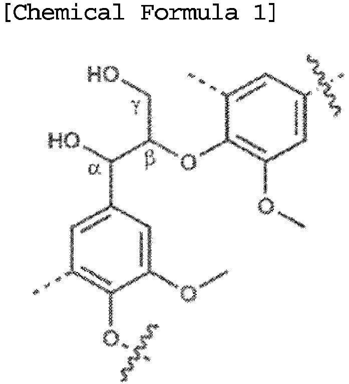

The above is called a β-O-4 bond.

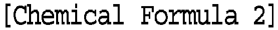

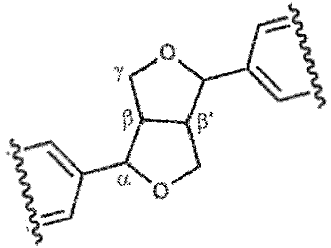

The above is called a resinol (β-β) bond.

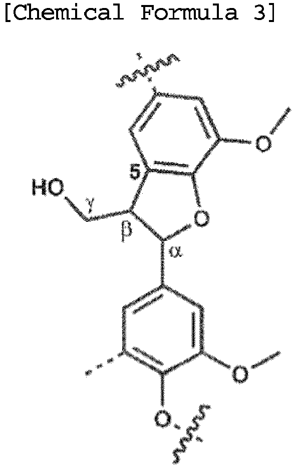

The above is called a phenylcoumaran (β-5) bond.

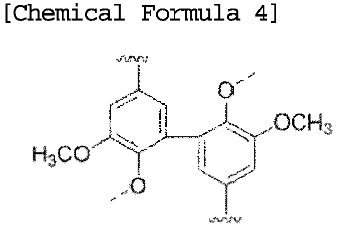

The above is called a 5-5 bond.

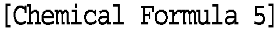

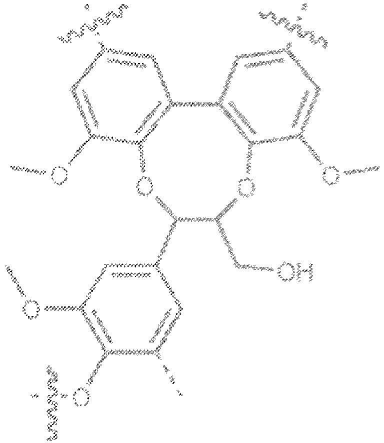

The above is called a dibenzodioxin (DBDO 5-5/4-O-β) bond.

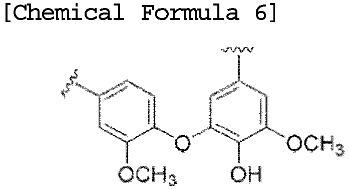

The above is called a 4-O-5 bond.

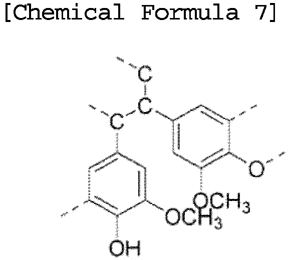

The above is called a β-1 bond.

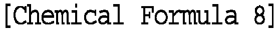

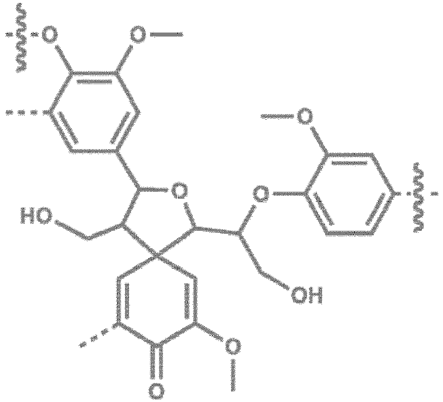

The above is called a spirodienone bond.

In natural lignin, the content of the β-O-4 ether type structure is highest among all of the binding modes between the monolignols, although it also varies depending on plant species. For example, in softwood, the content of the same is considered to be 40 to 60%. Further, in hardwood, for example, the content of the same in eucalyptus is considered to be about 45%.

In the white lignin of the present invention, the content of the β-O-4 ether type structure is 50% or more, preferably 60% or more, more preferably 65 to 85%, and still more preferably 70 to 80%, among all of the binding modes between the monolignols.

In the white lignin of the present invention, the content (%) of the β-O-4 ether type structure among all of the binding modes between the monolignols is preferably 1.2x% or more, more preferably 1.4x% or more, and even more preferably 1.6x% or more, with the content of the same in the lignin in the biomass used as a raw material being defined as x%. In the above, the upper limit is preferably 2x%.

The content of the β-O-4 ether type structure among all of the binding modes between the monolignols in lignin is specifically measured as follows. A sample is dissolved in deuterated dimethyl sulfoxide (DMSO-d₆) to 1 to 10 wt%, and the NMR spectrum is obtained using a Bruker Avance III 600 MHz NMR Spectrometer equipped with a low-temperature probe. The content of the β-O-4 ether type structure can be estimated from the signal volume in the HSQC (Heteronuclear single-quantum correlation spectroscopy) spectrum. The content is calculated in terms of per 100 aromatic rings of lignin. An aromatic nucleus can be calculated from the sum of the signal integrated values of the syringyl nucleus 2,6-positions S_{2,6} (+ S'_{2,6})/2 and the guaiacyl nucleus 2-position G₂(+G'₂) (in the case of herbaceous plants, an H nuclei is also added), and the ether-type structure can be calculated from the C-H spin binding signals at the α-position (benzyl position) and the β-position. The quantitative value in the two-dimensional NMR method is corrected according to a document (Okamura, H. Nishimura, T. Nagata, T. Kigawa, T. Watanabe, and M. Katahira, Accurate and molecular-size-tolerant NMR quantitation of diverse components in solution, Scientific Reports, 6, 21742. 2016) to calculate the accurate content.

The white lignin of the present invention exhibits high solubility in acetic acid and ethanol, and has a characteristic that the solubility in acetic acid is 50 or more, preferably 70 or more, and more preferably 100 or more, and has a characteristic that the solubility in ethanol is 30 or more, preferably 50 or more, and more preferably 60 or more, in the NMR-DMSO-based solubility index defined in the present description (described below).

The calculation method of the NMR-DMSO-based solubility index is as follows. 10 mg of lignin powder as a sample is weighed, dissolved in 0.5 mL of each of various NMR deuterated solvents, and subjected to quantitative 1H-NMR measurement. As the deuterated solvents, DMSO-d6, deuterated acetic acid-d4, deuterated water, deuterated ethanol d-6, or the like is used. The integrated values (6 to 8 ppm) of the aromatic region of the spectra obtained were acquired, the integrated value obtained from the 1H NMR spectrum of DMSO-d6 dissolved lignin was defined as 100, and the ratio of the integrated value of lignin dissolved in each of the various solvents to the integrated value of lignin dissolved in DMSO-d6 was calculated. Thereby, solubility in various solvents can be objectively and quantitatively calculated, and is defined as a DMSO-based solubility index. DSS (1 mM, chemical shift: 0 ppm) can be used as an internal spectral reference in quantification. In addition, 1 to 3% of deuterated DMSO (chemical shift: 39.6 ppm) can be added to each solvent and referenced as a reference.

The white lignin of the present invention is preferably characterized by having a solubility in 60 to 80% ethanol at 25°C of 2 w/v% or more. For this reason, by using the white lignin of the present invention, a self-assembled body described below is easily obtained, and a self-assembled body with high stability can be obtained. The solubility is preferably 4 w/v% or more, more preferably 5 w/v% or more, even more preferably 6 w/v% or more, and still more preferably 7 w/v% or more.

The measurement method for the solubility is as follows. A sample is stirred and dissolved in ethanol at 25°C and the resulting product is separated into an ethanol-soluble part and ethanol-insoluble part by solid-liquid separation. An aqueous ethanol solution at 25°C (1/1 = ethanol/water) is added to the ethanol-insoluble part, and the mixture is stirred for dissolution to obtain an aqueous ethanol solution-soluble part. The aqueous ethanol solution-soluble part is mixed with the ethanol soluble part to obtain a sample solution. The amount of the aqueous ethanol solution added is adjusted so that the ethanol concentration of the sample solution is in the range of 60 to 80%. In the step of obtaining the soluble part, dispersion and solubilization are performed with an ultrasonic cleaner at 28 kHz for 3 min, if necessary. The maximum sample concentration at which the sample solution is visually transparent is defined as "solubility in 60 to 80% ethanol at 25°C".

In the white lignin of the present invention, the constituent ratio of biphenyl-type lignin with a condensed structure is preferably 5% or less.

The white lignin of the present invention has a number average molecular weight (Mn) of preferably 0.7 to 9 kDa, more preferably 1 to 5 kDa, and still more preferably 1.5 to 4 kDa.

The white lignin of the present invention has a weight average molecular weight (Mw) of preferably 1 to 10 kDa, more preferably 1.5 to 8 kDa, and still more preferably 2 to 6 kDa.

In the present invention, the number average molecular weight (Mn) and weight average molecular weight (Mw) of lignin are specifically measured as follows. The molecular weight of lignin can be determined by size exclusion chromatography (SEC), i.e., gel permeation chromatography (GPC). A sample is dissolved in a solution of acetic anhydride and a base (e.g., pyridine) and reacted for 3 to 6 hours to obtain an acetylated product. The acetylated product is dissolved in tetrahydrofuran (THF) to a concentration of 2.0 mg/mL, and separation is performed by high-performance liquid chromatography. The columns for use are HZ-M columns (Tosoh Corporation, 150 mm × 4.6 mm id, 4 um, three columns connected in series). The analysis is performed by injecting 10 µL of the sample at a column temperature of 40°C using tetrahydrofuran (THF) as the mobile phase at a flow rate of 0.35 mL/min. A mass calibration curve is prepared using standard polystyrene, Tosoh PStQuick C (molecular weights (MW): 2,110,000, 427,000, 37,900, and 5970), pinoresinol (MW: 352), and vanillin (MW: 152) to determine the Mw and Mn of the sample.

The white lignin of the present invention has a degree of polydispersity (Mw/Mn) of preferably 2.5 or less, and more preferably 2 or less.

In the white lignin of the present invention, the ratio of the oxidized lignin is preferably 0.5 or less, more preferably 0.3 or less, and still more preferably 0.1 or less.

The oxidized lignin is defined to be a body in which a hydroxy group at a benzyl position in a syringyl nucleus (S nucleus), a guaiacyl nucleus (G nucleus), and a p-hydroxyphenyl nucleus (H nucleus), which are basic structural units of lignin, is oxidized to form a ketone structure (α-carbonyl structure). Oxidation at the benzyl position contributes to coloration because the conjugated system of the aromatic ring is extended to the α-position. Conventionally, oxidation of lignin has been inevitable by artificial manipulation associated with acquisition of lignin. Lignin is colored when oxidized by fine grinding, high-temperature and high-pressure conditions, and strong acid conditions. The ratio of oxidized lignin has been found to be an indicator of white lignin.

The ratio of the oxidized lignin can be calculated as follows.

### Method for calculating oxidized lignin ratio

A sample is dissolved in deuterated dimethyl sulfoxide (DMSO-d6) to 1 to 10 wt%, and an NMR spectrum is obtained using a Bruker Avance III 600 MHz NMR Spectrometer equipped with a low-temperature probe. The constituent ratio of the oxidized lignin is calculated from the volume of signals on the spectra of heteronuclear single-quantum correlation spectroscopy (HSQC). For the signal integrated value, TopSpin 3.6 software available from Bruker Corporation is used. Because the region to be integrated is slightly shifted depending on the sample and the measurement environment, the signal integration region was appropriately adjusted at the time of analysis (this point also applies in the other measurement methods described in this specification). Syringyl nucleus 2,6-positions (S, δH/δC = 6.7 ± 0.2 ppm/103.6 ± 1.5 ppm region) Guaiacyl nucleus 2-position (G, δH/δC = 6.96 ± 0.2 ppm/111.1 ± 1.5 ppm region) Oxidized syringyl nucleus 2,6-positions (S', δH/δC = 7.21 ± 0.2 ppm/106.1 ± 1.2 ppm region) Oxidized guaiacyl nucleus 2-position (G', δH/δC = 7.45 ± 0.2 ppm/111.5 ± 1.2 ppm region) Oxidized lignin ratio (S) = [signal integrated value of region S']/[signal integrated value of region S] Oxidized lignin ratio (G) = [signal integrated value of region G']/[signal integrated value of region G]. 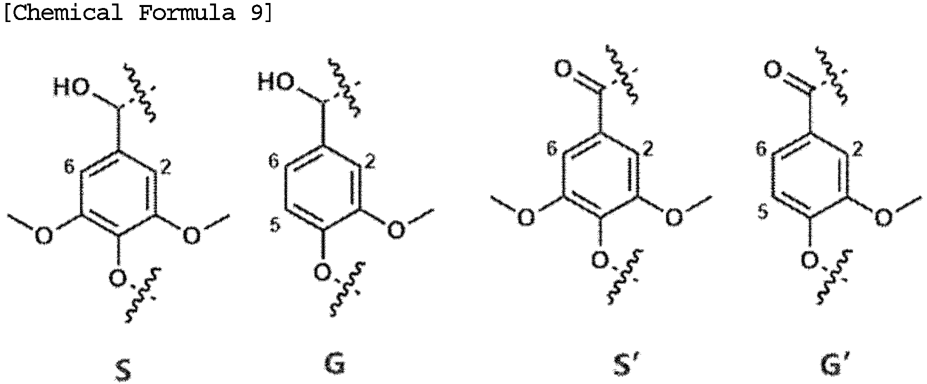
- S: syringyl lignin unit
- G: guaiacyl lignin unit
- S': oxidized syringyl lignin unit
- G': oxidized guaiacyl lignin unit

The white lignin of the present invention can be used in healthcare, cosmetics, dyes, resins, composite materials, and the like. In addition, the white lignin of the present invention is suitable as a start material for various biomass conversion studies and reaction designs. The white lignin of the present invention can be colored in various colors (in particular, a color that cannot be expressed when the original color of lignin (brown, black) is mixed).

### 3. White lignin-polysaccharide complex

The production method of the present invention, in one embodiment, makes it possible to obtain a white lignin-polysaccharide complex having a Hunter's whiteness (W) of 60 or more and at least one bond selected from the group consisting of an α-ether bond between lignin and a polysaccharide, an α-ester bond between lignin and a polysaccharide, and a γ-ester bond between lignin and a polysaccharide.

The white lignin-polysaccharide complex of the present invention has a Hunter's whiteness (W) of 60 or more. The Hunter's whiteness is measured and calculated in accordance with the method described in Test Example 1-3 described later. The Hunter's whiteness (W) of the white lignin-polysaccharide complex of the present invention is preferably 70 or more, more preferably 75 or more, still more preferably 80 or more, and further preferably 85 or more. The upper limit of the Hunter's whiteness (W) is not particularly limited, and is, for example, 98, 95, or 92.

Examples of polysaccharides include xylan and mannan as representatives, and also include glucomannan, galactoglucomannan, glucuronoxylan, and arabinoglucuronoxylan. Hemicelluloses are mainly composed of glucomannan in softwood, glucuronoxylan in hardwood, and arabinoxylan in herbaceous plants. In the above, the monomers include xylose, arabinose, glucose, mannose, galactose, and uronic acid. The side chains include an acetyl group and a methoxy group. Hemicelluloses in herbaceous plants include one in which ferulic acid and diferulic acid are bound to the arabinose side chain of arabinoxylan.

The white lignin-polysaccharide complex of the present invention is a lignin-polysaccharide complex that can be homogeneously dispersed in a separating solvent and is characterized by a polymeric structure in which lignin and a polysaccharide are copolymerized by covalent bonding. The white lignin-polysaccharide complex of the present invention is isolated by cleaving by a hydrolysis reaction a small portion of the bonds (not more than 10% of the bonds) in the hemicellulose main chain in the lignin-polysaccharide composite structure in the plant cell wall. By performing the hydrolysis reaction under mild conditions, over-decomposition, side reactions, and molecular weight reduction can be suppressed.

The white lignin-polysaccharide complex of the present invention is characterized by having at least one bond selected from the group consisting of an α-ether bond (LCα-ether bond) between lignin and a polysaccharide, an α-ester bond (LCα-ester bond) between lignin and a polysaccharide, and a γ-ester bond (LCγ-ester bond) between lignin and a polysaccharide.

In the white lignin-polysaccharide complex of the present invention, the α-ether bond (LCα ether) between lignin and a polysaccharide, which is a copolymerization point, is preferably concentrated to 1.2 times or more of the original binding unit constituent ratio of the raw material biomass.

Within the biomass, lignin and polysaccharides are also bound by non-covalent bonding. Non-covalent bonding is due to hydrophobic interactions, hydrogen bonding, electrostatic interactions, and polymer chain entanglement. Therefore, there is no clear evidence in prior studies that polymers having different properties, such as lignin and polysaccharides, form a copolymer by covalent bonding in a lignin-polysaccharide complex. In addition, the preparation of a lignin-polysaccharide complex by a conventional method is performed in multiple stages, and the yield is low (less than 5%) or the purity is low (the signal relative integrated value at the α-position of the LCα-ether bond per 100 aromatic rings is 1.5 or less).

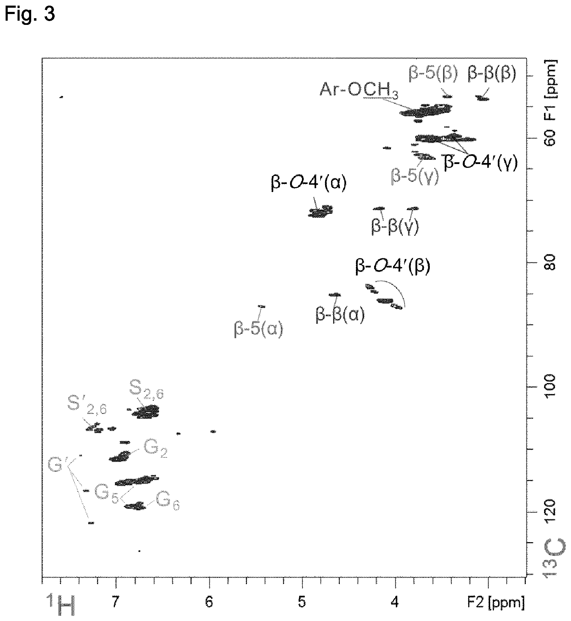

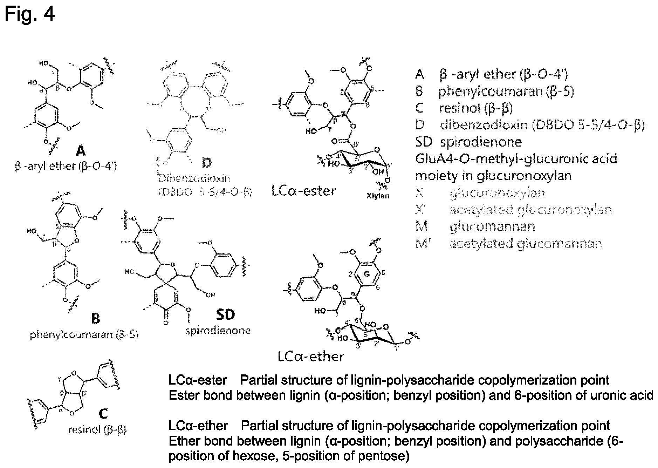

Clear evidence of copolymerization points (covalent bond) in a lignin-hemicellulose copolymer can be confirmed by signal attribution by the HSQC method, which is a two-dimensional NMR spectroscopy (Figs. 3 and 4). Clearer evidence can be confirmed by serial correlation analysis by HMBC and TOCSY-HSQC methods. For more details, reference can be made to a document (Nishimura et al., Direct evidence for α ether linkage between lignin and carbohydrates in wood cell walls, Sci. Rep. 2018) .

### LCα ether

The C-H correlation signal at the α-position of lignin (LC ether, δH/δC = 4.50±0.15 ppm/80.1+1 ppm region) and (LC ether, δH/δC = 4.95±0.2 ppm/81.5±1.5 ppm region), derived from the ether bond between the 6th position of hexose or the hydroxyl group of pentose and the α-position (benzyl) of lignin.

### LCα ester

The C-H correlation signal at the α-position of lignin (LCα ester, δH/δC = 5.88±0.15 ppm/74.0±1.5 ppm region), derived from the ester bond between the carboxy group at the 6th position of glucuronic acid (uronic acid) and the α-position (benzyl) of lignin.

### LCγ ester

The C-H correlation signal at the γ-position of lignin (LCγ ester, δH/δC = 4.0±0.15 ppm, 4.4+0.15 ppm, /64.8±1.5 ppm region), derived from the ester bond between the carboxyl group at the 6th position of glucuronic acid (uronic acid) and the γ-position of lignin.

The white lignin-polysaccharide complex of the present invention is preferably characterized by having a solubility in 60 to 80% ethanol at 25°C of 2 w/v% or more. For this reason, by using the white lignin-polysaccharide complex of the present invention, a self-assembled body described below is easily obtained, and a self-assembled body with high stability can be obtained. The solubility is preferably 4 w/v% or more, more preferably 5 w/v% or more, even more preferably 6 w/v% or more, and still more preferably 7 w/v% or more.

The white lignin-polysaccharide complex of the present invention exhibits high solubility in acetic acid and ethanol, and has a characteristic that the solubility in acetic acid is 50 or more, preferably 70 or more, and more preferably 100 or more and a characteristic that the solubility in ethanol is 30 or more, preferably 50 or more, and more preferably 60 or more in the NMR-DMSO-based solubility index defined in the present description (described below).

In the white lignin-polysaccharide complex of the present invention, in particular, the binding unit constituent ratio of LCα ether and LCα ester, which are copolymerization points, is preferably 2% or more, and more preferably 5% or more, based on the ratio of aromatic rings of lignin.

In the white lignin-polysaccharide complex of the present invention, the constituent ratio of polysaccharides to lignin is preferably 0.1 to 2, and more preferably 0.3 to 1.

The white lignin-polysaccharide complex of the present invention has a molecular weight (Mw) of preferably 1 to 15 kDa, and more preferably 2 to 7 kDa. The lignin-polysaccharide complex of the present invention has a degree of polydispersity (Mw/Mn) of preferably 3.5 or less, and more preferably 2.5 or less.

The measurement methods for the above parameters are in accordance with the measurement methods for the white lignin of the present invention, the measurement methods of Examples described below, or publicly-known methods.

### 4. Self-assembled Body

The self-assembled body of the present invention is a self-assembled body of the white lignin of the present invention and/or the white lignin-polysaccharide complex of the present invention, and is not particularly limited. Examples of the form of the self-assembled body include nanoparticles, fine particles including microparticles, hollow spherical fine particles as capsules, and composite structure-type fine particles. In addition, a self-assembled body in which aromatic rings are stacked, a thin-film body, and a multicore aggregate are also included. Self-assembly occurs easily, and the conditions for causing the self-assembly may be set appropriately. For example, the white lignin and/or the white lignin-polysaccharide complex of the present invention can be self-assembled in an aqueous solution in which the white lignin and/or the white lignin-polysaccharide complex is dispersed to form nanoparticles and hollow spherical particles.

In the above, specifically, it is also possible to form nanoparticles and hollow spherical particles by gradually adding water to a sample dissolved in a water-miscible organic solvent (alcohol, DMSO, or the like) system to cause self-assembly. While the ratio of water is finally about 95%, once a capsule is formed, it becomes stable in water. As another method, a capsule can be formed by dissolving a sample in alcohol-containing water or the like and naturally evaporating the solvent. As a result, a capsule having high uniformity on the order of submicron is formed.

In addition, in the case of using a solvent that tends to separate from water, such as a C4 or higher alcohol, natural oil, or diethyl sebacate, the lignin fine particles form a Pickering type or O/W type emulsion, and are effective as a dispersant or an emulsifier.

Conventional lignin (commercially available industrial kraft lignin) exhibits neither dispersibility nor solubility in ethanol as a hydrophilic solvent or a water-mixed solvent. The lignin-polysaccharide complex of the present invention exhibits dispersibility and solubility in a hydrophilic solvent and a water-mixed solvent. Therefore, by use of the white lignin and/or the white lignin-polysaccharide complex of the present invention, hollow spherical particles having higher safety for a living body can be obtained.

The self-assembled body of the white lignin and/or the white lignin-polysaccharide complex of the present invention exhibits fluorescence in a long-wavelength range. Specifically, the self-assembled body of the present invention exhibits fluorescence in the wavelength range of 350 nm to 600 nm. Further, with the self-assembled body of the white lignin and/or the white lignin-polysaccharide complex of the present invention, in particular, fluorescence shifted to significantly shorter wavelength as compared with the excitation wavelength, i.e., anti-Stokes fluorescence, is observed. Anti-Stokes fluorescence is observed even with an excitation light source weaker than a conventional light source, such as a xenon lamp. For this reason, the self-assembled body of the present invention can be used as an anti-Stokes fluorescent agent. In this case, for example, the self-assembled body of the present invention can be used as an anti-Stokes fluorescent paint, ink, and identifier, an upconversion/wavelength conversion molecular material, as well as a photoresponsive material.

The self-assembled body of the present invention can be stably dispersed in an aqueous solution and can maintain the fluorescence described above even in a dried solid.

Fine particles which are one form of the self-assembled body of the present invention have a number average particle size of, for example, 100 µm or less. In one preferred embodiment of the present invention, the fine particles of the present invention have a particle size of nanoparticles or microparticles, and form a hollow spherical form or a porous form, a sponge form, a solid form, or a composite form. The number average particle size is, for example, 10 nm or more. The number average particle size is preferably 30 nm to 30 um, more preferably 40 nm to 10 um, still more preferably 50 nm to 800 nm, and further preferably 70 nm to 500 nm.

The hollow spherical particles of the present invention can have a high cavity ratio. The hollow spherical particles of the present invention have a cavity ratio of, for example, 60% or more, preferably 70% or more, more preferably 75% or more, and still more preferably 80% or more. The cavity ratio is measured in accordance with the following method.

The particle size and the film thickness are measured, and the volume (cavity ratio) occupied by the cavity of the hollow spherical particles is calculated. Specifically, fluorescence observation with a 100 magnifications objective lens is photographed in the sectioning mode using a Keyence all-in-one fluorescence microscope BZ-X810, and the particle size and the film thickness are measured from the obtained image data using analysis software produced by Keyence Corporation. The cavity ratio (unit: %) is calculated by the formula: cavity ratio = (volume of cavity part (portion excluding film portion) of hollow spherical particle/volume of entire hollow spherical particle) × 100.

The hollow spherical particles and nanoparticles of the present invention can be used as, for example, a material transport carrier or the like with an active ingredient being contained in the interior, the hollow portion, and the shell structure portion (shell portion). This also makes it possible to impart anti-solubility, compatibility, light resistance, etc. to the active ingredient. The active ingredient can be widely selected, and examples thereof include pesticides, fertilizers, medicines, cosmetic components, fragrances, fluorescent agents, paints (e.g., vanillin, limonene, and menthol), proteins, antibodies, nucleic acids (oligonucleotides such as DNA and RNA), vaccines, peptides, lipids, hormones, sugars, glycosides, surfactants, ultraviolet absorbers, light scattering agents, adhesives, vitamins, coenzymes, minerals, cells, organelles, low molecular weight compounds (e.g., information transmitters such as pheromones; nitrogen-containing compounds such as alkaloids, monoterpenes, and sesquiterpenes, and isoprenoids such as terpenoids; and phenylpropanoids), polymer compounds, metal complexes, liposomes, and hydrogels.

Specifically, the hollow spherical particles and the nanoparticles of the present invention can be used as a drug carrier (for DDS applications). More specifically, they can be used as organic capsules or a nanocarrier as a drug carrier. Since they are natural products and are expected to be biocompatible, they are useful as a drug carrier. Furthermore, in the case of hollow spherical particles having an average particle size of 200 nm or less, preferably 100 nm or less, an enhanced permeation and retention effect (EPR effect), by which the particles do not leak out to normal tissues, and reach and accumulate in tumor tissues, can be expected.

The hollow spherical particles and the nanoparticles of the present invention can also be used as ultraviolet absorbing capsules for the purpose of imparting light resistance to protect an incorporated compound from ultraviolet rays. Since the absorption range of the hollow spherical particles and the nanoparticles includes wavelength ranges of UV-A and UV-B, the absorption range of the hollow spherical particles and the nanoparticles are also useful as an ultraviolet absorbing material to be used for skin care products such as sunscreens. It is presumed that the ultraviolet absorbing effect is caused by intermolecular interaction such as π-π stacking of aromatic lignin. The hollow spherical particles and the nanoparticles can also be used as an ultraviolet scattering agent and a light reflecting material. The hollow spherical particles and the nanoparticles can avoid white masking, which is observed with titanium oxide or the like, because the hollow spherical particles and the nanoparticles scatter ultraviolet rays (UV-A, UV-B regions) but transmit visible light, have reflection and absorption spectra that are more gradual than those of inorganic scattering agents, and can be made transparent.

The hollow spherical particles and the nanoparticles of the present invention can be negatively charged and positively charged as surface electrification. As anionic nanoparticles, the hollow spherical particles and the nanoparticles have a negative charge with a large absolute value in water and under weakly basic conditions, and have good dispersibility. The hollow spherical particles and the nanoparticles of the invention can have a negative charge, for example a zeta potential of -5 to - 150 mV, preferably -20 to -120 mV, more preferably -40 to -100 mV, and still more preferably -50 to -90 mV.

The hollow spherical particles and the nanoparticles of the present invention are negatively charged at neutral to basic pH, and have a function as a pH-responsive nanocarrier that can achieve switching from negative charge to positive charge with little change in particle size by acidifying the external environmental pH.

The hollow spherical particles and the nanoparticles of the present invention exhibit long-wavelength fluorescence. The long-wavelength fluorescence is caused by association between molecules of a conjugated system and in a polymer through self-assembly of lignin, i.e., formation of a so-called J-aggregate, and the hollow spherical particles and the nanoparticles exhibit long-wavelength fluorescence due to exciplex formation, preferably fluorescence of 400 nm or more, and more preferably fluorescence of 450 nm or more. Fluorescence in the long-wavelength range is useful for discrimination, and is suitable for applications of selectively optically detecting a target without allowing it to overlap coexisting components, and applications of tracing and imaging drug kinetics in vivo.

The hollow spherical particles and the nanoparticles of the present invention are stable over time and inhibited from undergoing association, aggregation, or the like, and can more stably maintain the particle size thereof.

The structural stability can also be evaluated by scanning electron microscopic observation. That is, the hollow spherical structure and the fine particle structure are maintained even in dry capsules and vacuum. The structure is similarly stable after the drug is incorporated. Such form stability performance is suitable for efficient formulation, integration, transportation, and storage applications of drug carriers.

The particle size, surface charge, dispersibility, and ability to incorporate the active ingredient of the hollow spherical particles and the nanoparticles of the present invention are widely adjustable depending on the plant species and site of the raw material biomass.

This difference is derived from the structural unit ratio of lignin (constituent ratio of aromatic nucleus structure having phenylpropane unit as a basic skeleton, guaiacyl lignin, syringyl lignin, p-hydroxyphenyl lignin, and flavonoid lignin) of lignin and the type of constituent polysaccharide in the constituent lignin-polysaccharide complex.

In addition, the particle size, surface charge, dispersibility, and ability to incorporate the active ingredient of the hollow spherical particles and the nanoparticles of the present invention are widely adjustable by separating the constituent ratio of lignin-polysaccharide (ratio obtained by dividing the number of monomer units of polysaccharide by the number of monomer units of lignin) and the type of polysaccharide in the lignin-polysaccharide complex to be constituted.

Lignin-polysaccharide complexes having different constituent ratios of lignin-polysaccharide can be easily separated on the basis of difference in solubility in alcohol/water, dioxane/water, or the like. In addition, such lignin-polysaccharide complexes can be separated by hydrophobic interaction chromatography (the method described in a document (Nishimura et al., Direct evidence for α ether linkage between lignin and carbohydrates in wood cell walls, Sci. Rep. 2018), TOYOPEARL HW50 column).

The polysaccharide component in the lignin-polysaccharide complex is hemicellulose. A hardwood raw material is rich in an acidic polysaccharide (glucuronoxylan) containing uronic acid, and a softwood derived material is rich in a neutral polysaccharide (glucomannan). In addition, separation focusing on polysaccharide components in a lignin-polysaccharide complex can be conducted by the ion exchange chromatography described in a document (Nishimura et al., Direct evidence for α ether linkage between lignin and carbohydrates in wood cell walls, Sci. Rep. 2018).

The hollow spherical particles and the nanoparticles of the present invention can control sustained releasability by acting an enzyme, which is a biocatalyst. By causing a polysaccharide lyase to act, the form of hollow spherical fine particles carrying a drug is changed or disintegrated, whereby the drug can be released. Enzymes have substrate specificity and activities selective on conditions including pH and temperature, and therefore control of sustained release conditions (pH, temperature, release rate) can be achieved by use of an enzyme (hydrolase, oxidase) according to the purpose.

### Examples

The present invention will be described in detail below with reference to Examples, but the present invention is not limited by these Examples.

### Referential Test Example 1. Lignin, lignin-polysaccharide complex, hemicellulose, cellulose-hemicellulose complex, and isolation of cellulose

Lignin, lignin-polysaccharide complexes, hemicelluloses, cellulose-hemicellulose complexes, and cellulose were isolated from biomass in accordance with an M-APA method, an A-APA method, or these methods with altered conditions. The yield, the physical properties, etc. of the isolated products were measured. The isolation methods according to the present invention are capable of isolating soluble lignin, lignin-polysaccharide complexes, hemicelluloses, cellulose-hemicellulose complexes, and cellulose from natural polymers in biomass with high efficiency, and include a step (A) of bringing a solution containing an organic acid and a peracid into contact with plant biomass. Specifically, the isolation was performed as described below.

### Referential Test Example 1-1. Preparation of finely milled wood flour

A fine powder (finely milled wood flour) with a volume average particle size of 10 µm (1 to 100 µm) was prepared from wood flour of hardwood (*eucalyptus* or Japanese beech), softwood (*Pinus densiflora,* Japanese cedar, or cypress), or a herbaceous plant (bagasse (sugarcane) or bamboo) by using a ball mill or bead mill method. As bamboo, Phyllostachys edulis powder (produced in Kyushu, Fukuoka prefecture, triennial) was used.

An example of preparation methods using a ball mill is described below. A planetary ball mill (P-6, Fritsch GmbH) was used. 2 g of wood flour and 100 g of zirconia beads with a diameter of 3 mm were placed in an 80-cc agate container and sealed in two overpots. After the overpots were vacuumed for 20 minutes, nitrogen gas (inert gas) was injected. A cycle composed of milling for 1 minute and a pause for 1 minute and 20 seconds was performed 180 times at 550 rpm (3 hours in total). The operation under the above conditions provides a fine wood flour while limiting oxidation during milling and denaturation due to heating.

### Referential Test Example 1-2. Preparation of wood flour

1 g of wood flour or wood chips (10 mm × 10 mm × 1 mm) of hardwood (*eucalyptus* or Japanese beech), softwood (Pinus *densiflora,* Japanese cedar, or cypress), or a herbaceous plant (Bagasse (sugarcane) or bamboo) was placed in the left and right two pots of a mixer mill (MM301, Retsch) . Under the conditions of a grinding time of 5 minutes and a frequency of 1/15 sec, milling was performed, thereby obtaining a powder (wood flour) with a volume average particle size of 0.1 mm.

### Referential Test Example 1-3. M-APA method (Milling-Acid-PerAcid Method)

For a starting material, the finely milled wood flour (average particle size: 10 µm) obtained in Referential Test Example 1-1 was used. 2 g of finely milled wood flour and 10 mL of a solution containing acetic acid and peracetic acid (composition: 17.4M acetic acid 99%, 0.14M peracetic acid less than 1%, 0.01M hydrogen peroxide, and a trace amount of water) were placed in a vial for the Initiator and irradiated with microwaves for 10 minutes at 50°C, initial power of 400 W, and stirring speed of 600 rpm with an Initiator+ 60 microwave synthesizer (Biotage). After the soluble part was treated with microwaves, 10 mL of a separating solvent (acetone) was added, followed by separation by spin-down (RCF 8000 × g, 5 min). The insoluble part was extracted with 10 mL of a separating solvent (acetone) and washed three times, and combined with the soluble part. This soluble lignin is referred to as acid peracid lignin (APA lignin).

The insoluble part was subjected to the same extraction operation with the microwave heating condition changed to 140°C as the second step. The soluble part is referred to as a lignin-hemicellulose copolymer. An insoluble part containing cellulose as a main component was obtained.

### Referential Test Example 1-4. A-APA method (Alkali-Acid-PerAcid method)

For a starting material, the wood flour (average particle size: 0.1 mm) obtained in Referential Test Example 1-2 was used. A 0.25M sodium hydroxide solution was prepared (1N diluted 4 times). 2.4 mL of the 0.25 M sodium hydroxide solution was added to 0.3 g of wood flour, followed by microwave extraction treatment (100°C, 30 min). A rough indication of the required amount of an alkali is 1 mmol of NaOH per gram of wood flour.

After microwave treatment, the soluble part and the insoluble part can be easily separated by decantation, spin-down, or filtration. Extraction with acetone (separating solvent) was additionally performed three times, and the extract was combined with the soluble part. From the insoluble part, acid peracid lignin (APA lignin) and a lignin-hemicellulose copolymer were obtained as soluble lignin according to the same extraction method as the M-APA method of Referential Test Example 1-3. An insoluble part containing cellulose as a main component was obtained.

### Referential Test Example 1-5. Study of conditions

Instead of acetic acid, other organic acids (formic acid, glyoxylic acid) were used for the study. Additionally, another peracid (hydrogen peroxide) was used instead of peracetic acid. For another peracid (hydrogen peroxide), the composition was changed as follows: acetic acid 12M, and hydrogen peroxide concentrations shown in the following table.

The study was conducted by changing the temperature at which plant biomass or an insoluble part comes in contact with an organic acid and a peracid to a temperature ranging from room temperature to 180°C. Additionally, at this time, the heating method was also changed from the internal heating method using microwave heating to an external heating method using an oil bath in conducting the study.

### Referential Test Example 1-6. Analysis and measurement method

Lignin, lignin-polysaccharide complexes, and cellulose were analyzed and measured according to the following methods.

### Referential Test Example 1-6-1. Measurement method for molecular weight (Mn, Mw, and degree of polydispersity)

The molecular weight was determined by size exclusion chromatography (SEC), i.e., gel permeation chromatography (GPC). A sample was dissolved in a solution of acetic anhydride and a base (e.g., pyridine) and reacted for 3 to 6 hours to obtain an acetylated product. The acetylated product was dissolved in tetrahydrofuran (THF) to a concentration of 2.0 mg/mL, and separation was performed by high-performance liquid chromatography (high-pressure gradient SEC analysis system manufactured by Shimadzu Corporation). The columns for use were HZ-M columns (Tosoh Corporation, 150 mm × 4.6 mm id, 4 um, three columns connected in series). The analysis was performed by injecting 10 µL of the sample at a column temperature of 40°C using tetrahydrofuran (THF) as the mobile phase at a flow rate of 0.35 mL/min. A mass calibration curve was prepared using standard polystyrene, Tosoh PStQuick C (molecular weights (MW): 2,110,000, 427,000, 37,900, and 5970), pinoresinol (MW: 352), and vanillin (MW: 152) to determine the weight average molecular weight Mw and the number average molecular weight Mn of the sample. The degree of polydispersity was determined as Mw/Mn.

### Referential Test Example 1-6-2. Method for calculating constituent ratio of binding units in molecule

Samples were dissolved in deuterated dimethyl sulfoxide (DMSO-d6) to 1 to 10 wt%, and their NMR spectra were obtained using a Bruker Avance III 600 MHz NMR Spectrometer equipped with a low-temperature probe. The constituent ratio of the interunit binding units of lignin was calculated from the volume of signals on the spectra of heteronuclear single-quantum correlation spectroscopy (HSQC). The constituent ratio was calculated as a ratio per 100 aromatic rings of lignin. The content of the ether binding unit was estimated from the sum of the integrated values of the C-H correlation signal at the β position (δH/δC = the region of 4.0 ± 0.2 ppm/85.6 ± 1.2 ppm, δH/δC = the region of 4.3 ± 0.2 ppm/83.0 ± 0.7 ppm). The quantitative value in the two-dimensional NMR method was corrected according to the TAF method described in a document (Okamura, H. Nishimura, T. Nagata, T. Kigawa, T. Watanabe, and M. Katahira, Accurate and molecular-size-tolerant NMR quantitation of diverse components in solution, Scientific Reports, 6, 21742. 2016) to calculate the accurate content.

### Referential Test Example 1-6-3. Method for calculating constituent ratio of lignin and polysaccharides

The sum of integrated values of the C-H correlation signals at the anomeric position (first position) of polysaccharides was calculated according to the NMR method described above and corrected according to the TAF method, followed by calculating the ratio per 100 aromatic rings of lignin.

### Referential Test Example 1-6-4. Method for calculating constituent ratio of lignin-polysaccharide copolymerization point

In the same manner as described above, the sum of integrated values of the C-H correlation signals derived from the binding units of the LCα ether and the LCα ester (LC ether, δH/δC = the region of 4.50 ± 0.15 ppm/80.1 ± 1 ppm; LC ester, δH/δC = the region of 5.88 ± 0.15 ppm/74.0 ± 1.5 ppm) was calculated according to the two-dimensional HSQC NMR method and corrected according to the TAF method, followed by calculating the ratio per 100 aromatic rings of lignin. In the A-APA method, although some of the ester bonds are hydrolyzed by an alkali treatment, an LCα ester-type lignin-hemicellulose copolymer can also be obtained.

### Referential Test Example 1-6-5. Method for calculating yield from raw material biomass

Each of the obtained components was confirmed with a pH meter, pH test paper, or peracid test paper (potassium iodide starch paper), and then neutralized and subjected to peracid quenching as necessary. Neutralization was performed by adding 1N HCl or 1N NaOH in small amounts stepwise. Peracid quenching was performed by adding a 1M aqueous sodium sulfite solution dropwise. The organic solvent was distilled off by using an evaporator. Subsequently, a dry powder was obtained by lyophilization. When a salt was produced by neutralization, the concentrated solution obtained after distillation of the organic solvent was re-extracted with a separating solvent (acetone) and desalted. Thereafter, the solvent was distilled off again with an evaporator, and lyophilization was performed, thereby obtaining a dry powder. Each of the obtained components was weighed, and the yield per raw material biomass was calculated.

### Results

A polymer with a desirable molecular structure, molecular weight, and yield can be obtained under the following conditions. Tables 1 to 7 show the results.

Table 1 shows the peracid conditions and the yield of each component of polymeric lignocellulose in the two-stage microwave extraction reaction according to the M-APA method (wt%, raw-material biomass ratio, raw material: *eucalyptus*).

**Table 1**

| Peracid concentration conditions | Peracetic acid 1% 0.14 mol/L | H₂O₂ 0.4% 0.11 mol/L | H₂O₂ 3.2% 1.0 mol/L | H₂O₂ 4.2% 1.4 mol/L |
|---|---|---|---|---|
| APA lignin | 7 | 6 | 9 | 11 |
| Lignin-hemicellulose copolymer | 12 | 11 | 14 | 25 |
| Residual cellulose | 79 | 82 | 75 | 63 |
| Total yield | 98 | 98 | 98 | 99 |

Table 2 shows the yield of each component of polymeric lignocellulose of various kinds of biomass in the two-stage microwave extraction reaction according to the A-APA method (wt%, raw-material biomass ratio).

**Table 2**

| | Hardwood | | Softwood | | | Herbaceous plant | |
|---|---|---|---|---|---|---|---|
| Raw material biomass plant species | Eucalyptus | Japanese | Pinus densiflora | Japanese | Cypress | Bagasse (Sugarcane) | Bamboo |
| Weakly alkaline soluble lignin | 21 | 22 | 26 | 20 | 19 | 33 | 32 |
| APAlignin | 5 | 5 | 4 | 5 | 6 | 4 | 5 |
| Lignin-hemicellulose copolymer | 32 | 23 | 14 | 14 | 12 | 12 | 15 |
| Total soluble part | 58 | 51 | 44 | 40 | 37 | 50 | 51 |
| Residual cellulose | 44 | 39 | 58 | 65 | 61 | 48 | 52 |
| Total | 102 | 90 | 103 | 105 | 98 | 98 | 104 |

Table 3 shows the peracid conditions and the molecular weight of each component of polymeric lignocellulose in the two-stage microwave extraction reaction according to the M-APA method (GPC analysis values of acetylated products).

**Table 3**

| Eucalyptus Peracetic acid 1% | Mn | Mw | Mw/Mn |
|---|---|---|---|
| APA lignin | 3814 | 7927 | 2.1 |
| Lignin-hemicellulose copolymer | 4203 | 8513 | 2.0 |

| Eucalyptus H₂O₂ 0.4% | Mn | Mw | Mw/Mn |
|---|---|---|---|
| APAlignin | 3510 | 6490 | 1.8 |
| Lignin-hemicellulose copolymer | 4128 | 6758 | 1.6 |

| Eucalyptus H₂O₂ 3.2% | Mn | Mw | Mw/Mn |
|---|---|---|---|
| APAlignin | 3964 | 9064 | 2.3 |
| Lignin-hemicellulose copolymer | 3364 | 6224 | 1.9 |

| Eucalyptus H₂O₂4.2% | Mn | Mw | Mw/Mn |
|---|---|---|---|
| APAlignin | 3709 | 9124 | 2.5 |
| Lignin-hemicellulose copolymer | 1865 | 4291 | 2.3 |

Table 4 shows the yield of each component of polymeric lignocellulose of various kinds of biomass in the two-stage microwave extraction reaction according to the M-APA method (wt%, raw-material biomass ratio).

**Table 4**

| | Hardwood | | Softwood | | Herbaceous plant | |
|---|---|---|---|---|---|---|
| Biomass species | Eucalyptus | Japanese | Pinus densiflora | Japanese cedar | Bagasse (Sugarcane) | Bamboo |
| APAlignin | 7 | 4 | 7 | 4 | 7 | 11 |
| Lignin-hemicellulose copolymer | 14 | 9 | 8 | 9 | 13 | 18 |
| Residual cellulose | 71 | 84 | 83 | 85 | 79 | 69 |
| Total yield | 92 | 97 | 98 | 97 | 99 | 98 |

Solvent: Acetic acid (containing 1% of peracetic acid in an amount of 0.14 mol/L)
Microwave Extraction Conditions: APA lignin soluble part was obtained at 50°C for 10 min (first stage), and a lignin-hemicellulose copolymer was obtained at 140°C for 10 min (second stage)

Table 5 shows the yield of each component of polymeric lignocellulose of various kinds of biomass in the one-stage microwave extraction reaction according to the A-APA method (wt%, raw-material biomass ratio).

**Table 5**

| | Hardwood | | Softwood | | | Herbaceous plant | |
|---|---|---|---|---|---|---|---|
| Raw material biomass plant species | Eucalyptus | Japanese | Pinus densiflora | Japanese cedar | Cypress | Bagasse (Sugarcane) | Bamboo |
| Weakly alkaline soluble lignin | 22 | 22 | 25 | 19 | 18 | 35 | 32 |
| APA lignin + lignin-polysaccharide complex | 30 | 26 | 13 | 21 | 19 | 12 | 19 |
| Total soluble part | 52 | 48 | 39 | 40 | 37 | 47 | 51 |
| Residual cellulose | 54 | 55 | 63 | 65 | 68 | 51 | 55 |
| Total | 106 | 103 | 101 | 105 | 105 | 98 | 106 |

Table 6 shows the molecular weight of each component of polymeric lignocellulose of various kinds of biomass obtained according to the A-APA method (GPC analysis values of acetylated products).

**Table 6**

| Eucalyptus | Mn | Mw | Mw/Mn |
|---|---|---|---|
| Weakly alkaline soluble lignin | 1571 | 3006 | 1.9 |
| APAlignin | 2467 | 3645 | 1.5 |
| Lignin-hemicellulose copolymer | 2023 | 6438 | 32 |
| APA lignin + lignin-polysaccharide complex | 2116 | 7156 | 3.4 |

| Japanese beach | Mn | Mw | Mw/Mn |
|---|---|---|---|
| Weakly alkaline soluble lignin | 1254 | 3502 | 2.8 |
| APAlignin | 4977 | 8895 | 1.8 |
| Lignin-hemicellulose copolymer | 1935 | 4947 | 2.6 |
| APA Lignin + lignin-polysaccharide complex | 1875 | 5115 | 2.7 |

| Pinus densiflora | Mn | Mw | Mw/Mn |
|---|---|---|---|
| Weakly alkaline soluble lignin | 1437 | 3768 | 2.6 |
| APA lignin | 1178 | 2361 | 2.0 |
| Lignin-hemicellulose copolymer | 2138 | 5544 | 2.6 |
| APA Lignin + lignin-polysaccharide complex | 1879 | 4565 | 2.4 |

| Japanese cedar | Mn | Mw | Mw/Mn |
|---|---|---|---|
| Weakly alkaline soluble lignin | 1293 | 2876 | 22 |
| APAlignin | 974 | 1836 | 1.9 |
| Lignin-hemicellulose copolymer | 1992 | 4842 | 2.4 |
| APA Lignin + lignin-polysaccharide complex | 2088 | 4579 | 22 |

| Cypress | Mn | Mw | Mw/Mn |
|---|---|---|---|
| Weakly alkaline soluble lignin | 1711 | 3519 | 2.1 |
| APAlignin | 985 | 1948 | 2.0 |
| Lignin-hemicellulose copolymer | 1981 | 4882 | 2.5 |
| APA Lignin + lignin-polysaccharide complex | 2069 | 4671 | 2.3 |

| Bagasse (Sugarcane) | Mn | Mw | Mw/Mn |
|---|---|---|---|
| Weakly alkaline soluble lignin | 3150 | 6179 | 2.0 |
| APAlignin | 2168 | 3024 | 1.4 |
| Lignin-hemicellulose copolymer | 1785 | 3588 | 2.0 |
| APA Lignin + lignin-polysaccharide complex | 1525 | 2949 | 1.9 |

| Bamboo | Mn | Mw | Mw/Mn |
|---|---|---|---|
| Weakly alkaline soluble lignin | 3035 | 6325 | 2.1 |
| APAlignin | 2437 | 3601 | 1.5 |
| Lignin-hemicellulose copolymer | 2119 | 4798 | 2.3 |
| APA lignin + lignin-polysaccharide complex | 1790 | 3718 | 2.1 |

The study of conditions found that when the starting material is wood-based biomass, the temperature suitable for contact with an organic acid and a peracid is 40 to 90°C for obtaining soluble lignin; and that the temperature suitable for contact with an organic acid and a peracid is 100 to 160°C for obtaining a lignin-hemicellulose copolymer. The study of conditions also found that when the starting material is herbaceous biomass, the temperature suitable for contact with an organic acid and a peracid is from room temperature to 60°C for obtaining soluble lignin; and that the temperature suitable for contact with an organic acid and a peracid is 70 to 150°C for obtaining a lignin-hemicellulose copolymer.

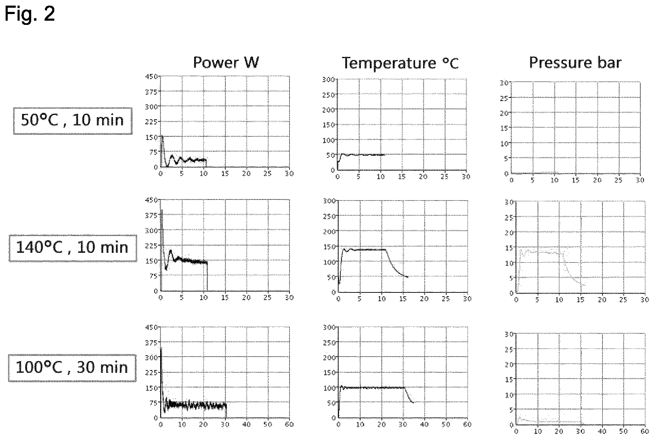

The study of conditions found that the heating time by microwave irradiation may be 5 to 30 minutes, and preferably 10 minutes. The net irradiation time was short. See Fig. 2 for the microwave profile, and data on temperature and pressure.

The study of conditions also found that the microwave heating resulted in a higher yield and a higher selectivity at low temperature in a short time with a low energy input than the external heating method. More specifically, microwave effects such as local heating, internal heating, electron transfer, and a chemical-permeation-promoting effect were observed.

The study of conditions also found that acetic acid, formic acid, and glyoxylic acid (organic acids) were all able to isolate lignin, and that acetic acid was most suitable from the viewpoint of yield, purity, and industrial application.

Fig. 3 shows the results of NMR in Referential Test Examples 1-6-2 and 1-6-3. Fig. 3 shows the results of analysis of lignin isolated from *eucalyptus* (starting material) according to the M-APA method (microwave treatment at 50°C for 10 minutes with acetic acid peracetic acid 1%). Quantification of the proportion of interunit bonds of lignocellulose according to the TAF-NMR method found that the signal derived from lignin was 99%, and that the signal derived from polysaccharides (hemicelluloses) was 1%. The breakdown of the interunit bonds of lignin was the following: 81% of ether-type β-O-4, 5% of β-5, 11% of β-β, 1% of dibenzodioxocin, and 1% for the remainder. See Fig. 4 for the partial chemical structures of the lignin interunit bonds and the covalent bonds of lignin-hemicellulose.

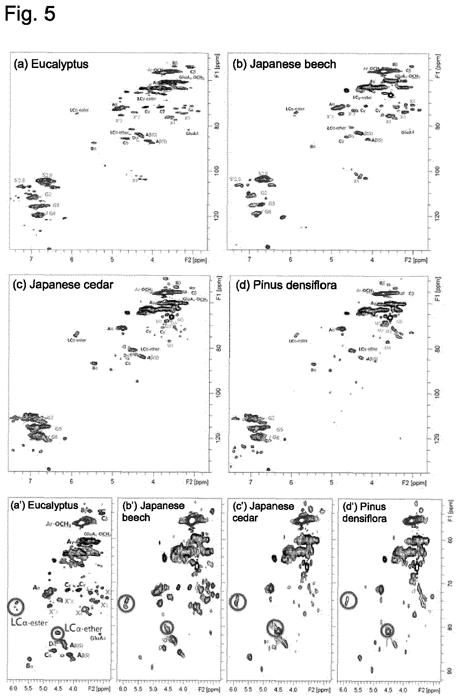

Fig. 5 shows the results of NMR in Referential Test Example 1-6-4. Fig. 5 shows the results of analysis of the lignin-hemicellulose copolymer isolated from individual plants (starting materials) according to the M-APA method (microwave treatment at 50°C for 10 minutes with acetic acid peracetic acid 1%). The LC bonds (ether type and ester type) indicated by circles in the figure are a main branched structure present in a ratio equivalent to or higher than the abundance ratio of β-5 and β-β bonds, which are the main interunit bonds of lignin. The isolated lignin-hemicellulose copolymer is characterized in particular by the presence of an LCα-ester linkage.

### Referential Test Example 2. Solubility Measurement

The lignin and the lignin-hemicellulose copolymer obtained according to the method of Referential Test Example 1 or a method similar thereto were measured for the solubility in 60 to 80% ethanol at 25°C. Table 7 shows the details of the measurement samples. The abbreviations in Table 7 are as listed below.
PA: Peracetic Acid
HP: Hydrogen Peroxide
50: MW50 ACTN, treatment with microwaves at 50°C, high-quality polymeric lignin
140: MW50-Mw140 ACTN, after residues were treated with microwaves at 50°C, the residues were treated at 140°C (second stage), a lignin-hemicellulose copolymer
A50: An acetic acid peracetic acid system, HP PA1% AA Mw50 ACN, high-quality polymeric lignin treated with microwaves at 50°C
H50: An acetic acid hydrogen peroxide system, HP 1M hydrogen peroxide, Mw50 ACN, high-quality polymeric lignin treated with microwaves at 50°C.

**Table 7**

| | | |
|---|---|---|
| EA50 | Eucalyptus chip | Acetic acid-peracetic acid system PA1%AA Mw50 ACTN |
| EA140 | Eucalyptus chip | Acetic acid-peracetic acid system PA1%AA Mw50-Mw140 ACTN |
| EH50 | Eucalyptus chip | Acetic acid-hydrogen peroxide system HP 1M hydrogen peroxide Mw50 ACTN |
| BH50 | Domestic Japanese beech sapwood | Acetic acid-hydrogen peroxide system HP 1M hydrogen peroxide Mw50 ACTN |
| PH50 | Domestic Pinus densiflora sapwood | Acetic acid-hydrogen peroxide system HP 1M hydrogen peroxide Mw50 ACTN |
| CH50 | Domestic Japanese cedar sapwood | Acetic acid-hydrogen peroxide system HP 1M hydrogen peroxide Mw50 ACTN |
| CH140 | Domestic Japanese cedar sapwood | Acetic acid-peracetic acid system HP 1M hydrogen peroxide Mw50-Mw140 ACTN |
| TA50 | Domestic bamboo: Phyllostachys edulis powder | Acetic acid-peracetic acid system PA1%AA Mw50 ACTN |
| TA140 | Domestic bamboo: Phyllostachys edulis powder | Acetic acid-peracetic acid system PA1%AA Mw50-Mw140 ACTN |
| HP50 | Domestic bamboo: Phyllostachys edulis powder | Acetic acid-hydrogen peroxide system HP 1M hydrogen peroxide Mw50 ACTN |

The measurement method for the solubility is as follows. A sample was stirred and dissolved in ethanol at 25°C, and the resulting product was separated into an ethanol-soluble part and ethanol-insoluble part by solid-liquid separation. An aqueous ethanol solution at 25°C (1/1 = ethanol/water) was added to the ethanol-insoluble part, and the mixture was stirred for dissolution to obtain an aqueous ethanol solution-soluble part. The aqueous ethanol solution-soluble part was mixed with the ethanol soluble part to obtain a sample solution. The amount of the aqueous ethanol solution added was adjusted so that the ethanol concentration of the sample solution was in the range of 60 to 80%. In the step of obtaining the soluble part, dispersion and solubilization were performed with an ultrasonic cleaner at 28 kHz for 3 min, as necessary. The maximum sample concentration at which the sample solution was visually transparent was defined as "solubility in 60 to 80% ethanol at 25°C".

Table 8 shows the results. The results indicate that the lignin and lignin-hemicellulose copolymers obtained by the method of the present invention exhibit excellent ethanol solubility.

**Table 8**

| | Solubility |
|---|---|
| EA50 | 8 w/v% in 80% Aqueous ethanol solution |
| EA140 | 8 w/v% in 80% Aqueous ethanol solution |
| EH50 | 15 w/v% in 60% Aqueous ethanol solution |
| BH50 | 20 w/v% in 60% Aqueous ethanol solution |
| PH50 | 20 w/v% in 60% Aqueous ethanol solution |
| CH50 | 8 w/v% in 70% Aqueous ethanol solution |
| CH140 | 20 w/v% in 60% Aqueous ethanol solution |
| TA50 | 8 w/v% in 80% Aqueous ethanol solution |
| TA140 | 8 w/v% in 80% Aqueous ethanol solution |
| HP50 | 15 w/v% in 60% Aqueous ethanol solution |

### Test Example 1. Production of white lignin 1

White lignin was produced by alkali-treating a biomass, washing the resulting alkali-treated material with a liquid, and treating the washed material with an APA method. Specifically, the isolation was performed as described below.

The measurements were performed with the following. Analysis was performed with accompanying analysis software of the devices.
UV-visible Absorption Spectrum: UV-2700 (manufactured by Shimadzu Corporation)

A black quartz cell for spectrometry (optical path length: 10 mm) or a High Precision Cell, Art. No Light Path 10 × 10 mm was used. The lignin fine particle sample was diluted with 30 v/v% EtOHaq to a final concentration of lignin of 0.005 w/v%. Wavelength scanning (200 to 900 nm, 250 to 600 nm) was performed.
Fluorescence Spectrum: Spectrofluorometer RF-6000 (manufactured by Shimadzu Corporation)

Fluorescence Measurement: a fully transparent synthetic quartz cell (optical path length: 10 mm) and a Starna triangular quartz cell SF3 were used. The lignin fine particle sample was diluted with 30 v/v% EtOHaq to a final concentration of lignin of 0.005 w/v%.

3D fluorescence spectra were measured at an excitation wavelength of 240 to 650 nm, a data interval of 2 nm, a fluorescence wavelength of 240 to 650 nm, a data interval of 2 nm, and a scan speed of 6000 nm/min, with an ultraviolet cut filter U310 mounted on the excitation side in order to reduce the influence of scattered light and multidimensional light. The bandwidth was 10 nm on the excitation side, and 20 nm on the fluorescence side, with the sensitivity set to Low.

Fluorescence Microscope Measurement: An All-in-One Fluorescence Microscope BZ-X810 (manufactured by Keyence Corporation) was used.

Particle size distribution (DLS) and zeta potential were measured with a DLS dynamic light scattering nanoparticle analyzer SZ-100 (Horiba, Ltd.). A sample was placed in a particle size measurement cell and a zeta potential measurement cell (Horiba, Ltd.) and measured. The measurements were each repeated 3 to 5 times, and average values were calculated.

The particle size distribution was measured by qNANO using a qNano Gold TRPS Measurement System (manufactured by Meiwafosis Izon Science). The measurement was performed by attaching Nanopore NP200 or NP400 and adding 35 µL of a sample. The measurement was performed up to 500 to 1000 Particle Counts for 30 seconds or more. The stretching of pores was set to 37.00 mm, and the measurement was conducted at a constant voltage of 2.0 V.

### Test Example 1-1. Preparation of wood flour

1 g of wood flour or wood chips (10 mm × 10 mm × 2 mm) of hardwood (eucalyptus), softwood (*Pinus densiflora,* Japanese cedar, or cypress), or a herbaceous plant (bagasse (sugarcane) or bamboo) was placed in the left and right two pots of a mixer mill (MM301, Retsch). Under the conditions of a grinding time of 5 minutes and a frequency of 1/15 sec, milling was performed, thereby obtaining a powder (wood flour) with a volume average particle size of 0.1 mm.

### Test Example 1-2. Alkali treatment, washing, APA method treatment Example 1

In a vessel, 14.4 mL of a 0.25 M aqueous sodium hydroxide solution was added to 1.8 g of the eucalyptus wood flour obtained in Test Example 1-1. The vessel was soaked in a hot water bath at 60°C and treatment was conducted for 1 hour. After the hot water bath treatment, a soluble part and an insoluble part were separated by spinning-down, and the insoluble part was washed with water. The washing with water was performed until the washing waste liquid became neutral. The washed material obtained (containing 6.5 mL of water) and an acetic acid-hydrogen peroxide-containing solution (14.1 mL of 99% acetic acid (17.1 M), 0.294 mL of 30% v/v hydrogen peroxide water) were placed in an Initiator vial, and irradiated with microwaves for 10 minutes at 50°C, initial power of 400 W, and stirring speed of 600 rpm with an Initiator + 60 microwave synthesizer manufactured by Biotage. After the irradiation, 14.4 mL of separating solvent 1 (70% aqueous ethanol solution) was added and mixed. Then, the mixture was spun-down (RCF 10,000 × g, 5 min) and a soluble part (supernatant) was collected. The solvent in the soluble part was distilled off, 6 mL of separating solvent 2 (80% aqueous dioxane solution) was added to the dried material obtained, and mixed. Then, the mixture was spun-down (RCF 10,000 × g, 5 min) and a soluble part (supernatant) was collected. The soluble part was dried, affording 58 mg of white lignin powder.

### Example 2

113 mg of white lignin powder was obtained in the same manner as in Example 1 except that an ultrasonic treatment was performed in place of the hot water bath treatment in the alkali treatment. In the ultrasonic treatment, 14.4 mL of a 0.25 M sodium hydroxide solution was added to 1.8 g of the eucalyptus wood flour obtained in Test Example 1-1 in the vessel, and the mixture was irradiated with 28 kHz ultrasonic waves intermittently for 30 minutes using an ultrasonic irradiation device (manufactured by AS ONE Corporation, product name: ULTRASONIC CLEANER MODEL VS-100III). During this operation, the liquid temperature was 30 to 50°C.

### Example 3

47 mg of white lignin powder was obtained in the same manner as in Example 1 except that a 0.1 M aqueous sodium hydroxide solution was used in place of the 0.25 M aqueous sodium hydroxide solution in the alkali treatment and a microwave treatment was performed in place of the hot water bath treatment in the alkali treatment. In the microwave treatment, 14.4 mL of a 0.25 M sodium hydroxide solution was placed in an Initiator vial with respect to 1.8 g of the eucalyptus wood flour obtained in Test Example 1-1, and the mixture was irradiated with microwaves for 30 minutes at 40°C, initial power of 400 W, and stirring speed of 600 rpm with an Initiator + 60 microwave synthesizer manufactured by Biotage.

### Example 4

29 mg of white lignin powder was obtained in the same manner as in Example 2 except that cypress wood flour (Test Example 1-1) was used in place of the eucalyptus wood flour.

### Example 5

56 mg of white lignin powder was obtained in the same manner as in Example 1 except that a 0.1 M aqueous sodium hydroxide solution was used in place of a 0.25 M aqueous sodium hydroxide solution in the alkali treatment, and a hot water bath treatment at 30°C for 30 minutes was performed in place of the hot water bath treatment at 60°C for 1 hour in the alkali treatment.

### Example 6

63 mg of white lignin powder was obtained in the same manner as in Example 1 except that a hot water bath treatment at 30°C for 30 minutes was performed in place of the hot water bath treatment at 60°C for 1 hour in the alkali treatment.

### Example 7

47 mg of white lignin powder was obtained in the same manner as in Example 2 except that a 0.1 M aqueous sodium hydroxide solution was used in place of the 0.25 M aqueous sodium hydroxide solution in the alkali treatment.

### Example 8

80 mg of white lignin powder was obtained in the same manner as in Example 3 except that a 0.25 M aqueous sodium hydroxide solution was used in place of the 0.1 M aqueous sodium hydroxide solution in the alkali treatment.

### Example 9

46 mg of white lignin powder was obtained in the same manner as in Example 2 except that an acetic acid stock solution (17.5 M) was used in place of the acetic acid-hydrogen peroxide-containing solution in the APA method treatment.

### Example 10

53 mg of white lignin powder was obtained in the same manner as in Example 2 except that the washed material (containing 6.5 mL of water) obtained after the alkali treatment in the APA method treatment and an acetic acid-hydrogen peroxide-containing solution (14.1 mL of 99% acetic acid (17.1 M), 0.029 mL of 30% v/v hydrogen peroxide water) were used. (final concentration: acetic acid/hydrogen peroxide/water = 68%/0.048%/31.6%)

### Example 11

37 mg of white lignin powder was obtained in the same manner as in Example 1 except that a hot water bath treatment at 30°C for 10 minutes was performed in place of the hot water bath treatment at 60°C for 1 hour in the alkali treatment.

### Example 12

When the soluble part and the insoluble part were separated in the alkali treatment and the APA treatment, suction filtration was used in place of spin-down. 24 mg of white lignin powder was obtained in the same manner as in Example 2 except that the washed material (containing 1.9 mL of water) obtained after the alkali treatment and an acetic acid-hydrogen peroxide-containing solution (14.1 mL of 99% acetic acid (17.1 M), 0.29 mL of 30% v/v hydrogen peroxide water) were used. (Final concentration: acetic acid/hydrogen peroxide/water = 86.5%/0.613%/12.8%)

In the ultrasonic treatment in the alkali treatment, 28 kHz ultrasonic waves were applied intermittently for 30 minutes using an ultrasonic cleaner MCD-10P manufactured by AS ONE Corporation in place of the ULTRASONIC CLEANER MODEL VS-100III manufactured by AS ONE Corporation. During this operation, the liquid temperature was 30 to 50°C.

### Example 13

51 mg of white lignin powder was obtained in the same manner as in Example 12 except that acetone was used in place of the 70% aqueous ethanol solution as the separating solvent 1 in the alkali treatment and the APA treatment.

### Example 14

52 mg of white lignin powder was obtained in the same manner as in Example 12 except that Wiley Mill-like (sawdust-like) eucalyptus wood flour was prepared at a scale of 1.8 g in place of the eucalyptus wood flour obtained in Test Example 1-1.

### Example 15

76 mg of white lignin powder was obtained in the same manner as in Example 14 except that 2.0 g of Wiley Mill-like (sawdust-like) Japanese cedar wood flour was used in place of the eucalyptus wood flour obtained in Test Example 1-1.

### Example 16

22 mg of white lignin powder was obtained in the same manner as in Example 12 except that after the microwave irradiation in the APA treatment, only the acetic acid-hydrogen peroxide-containing solution was collected, neutralized by a dialysis method, desalted, and then freeze-dried.

### Example 17

51 mg of white lignin powder was obtained in the same manner as in Example 12 except that the APA treatment was performed with the extraction vessel purged with nitrogen. As compared with Example 12, the whiteness (improved from 77.6 to 81.9) and the yield were improved with the same sample under the same conditions.

### Example 18

65.5 mg of white lignin powder was obtained in the same manner as in Example 12 except that Wiley Mill-like (sawdust-like) Japanese beech wood flour was prepared at a scale of 2.0 g in place of the eucalyptus wood flour obtained in Test Example 1-1.

### Example 19

87.7 mg of white lignin powder was obtained in the same manner as in Example 12 except that Wiley Mill-like (sawdust-like) cypress wood flour was prepared at a scale of 2.0 g in place of the eucalyptus wood flour obtained in Test Example 1-1.

### Example 20

56.3 mg of white lignin powder was obtained in the same manner as in Example 12 except that Wiley Mill-like (sawdust-like) *Pinus densiflora* wood flour was prepared at a scale of 2.0 g in place of the eucalyptus wood flour obtained in Test Example 1-1.

### Example 21

67.9 mg of white lignin powder was obtained in the same manner as in Example 12 except that Phyllostachys edulis powder (produced in Kyushu, Fukuoka prefecture, triennial) was prepared at a scale of 2.0 g in place of the eucalyptus wood flour obtained in Test Example 1-1.

### Example 22

51.4 mg of white lignin powder was obtained in the same manner as in Example 12 except that Wiley Mill-like (sawdust-like) rice straw powder was prepared at a scale of 2.0 g in place of the eucalyptus wood flour obtained in Test Example 1-1.

### Example 23

45.8 mg of white lignin powder was obtained in the same manner as in Example 12 except that Wiley Mill-like (sawdust-like) bagasse powder was prepared at a scale of 2.0 g in place of the eucalyptus wood flour obtained in Test Example 1-1.

### Example 24

51.1 mg of white lignin powder was obtained in the same manner as in Example 20 except that in the APA method treatment, a hot water bath treatment was employed in place of the microwave treatment, and a heat treatment for 15 minutes was performed in place of the heat treatment for 10 minutes.

### Example 25

64.9 mg of white lignin powder was obtained in the same manner as in Example 24 except that Wiley Mill-like eucalyptus wood flour was used in place of the Wiley Mill-like (sawdust-like) *Pinus densiflora* wood flour.

### Example 26

42.18 mg of white lignin powder was obtained in the same manner as in Example 25 except that the eucalyptus wood flour obtained in Test Example 1-1 was prepared at a scale of 1.8 g, and in the APA method treatment, after the sample was sealed in an Initiator vial, air was introduced with a syringe from the septum on the upper part of the vial, and the pressure in the vessel after the sealing was adjusted to 2.25 bar.

In addition, the APA-treated wood flour was placed in an Initiator vial together with the acetic acid-hydrogen peroxide-containing solution described in Example 1, and the mixture was heated for 10 minutes with a hot stirrer equipped with a heat block preheated to 140°C. Extraction operation was performed in the same manner as in Example 1, thereby affording 220.7 mg of white LCC powder.

### Example 27

1224.9 mg of white lignin powder was obtained in the same manner as in Example 24 except that a hot water bath treatment at 23.3 to 26.3°C for 10 minutes was performed in place of the ultrasonic treatment at 30 to 50°C for 30 minutes in the alkali treatment, the preparation was performed at a scale of 50 g of Wiley Mill-like cypress wood flour in place of the Wiley Mill-like (sawdust-like) *Pinus densiflora* wood flour, a 0.01 M aqueous sodium hydroxide solution was used in place of the 0.25 M aqueous sodium hydroxide solution in the alkali treatment, and an acetic acid stock solution (17.5 M) was used in place of the acetic acid-hydrogen peroxide-containing solution in the APA method treatment.

### Example 28

72.5 mg of white lignin powder was obtained in the same manner as in Example 12 except that Wiley Mill-like (sawdust-like) Japanese beech wood flour from which extracted components of the raw material had been removed by degreasing and depectin was prepared at a scale of 2.0 g in place of the eucalyptus wood flour obtained in Test Example 1-1.

### Example 29

2183.3 mg of white lignin powder was obtained in the same manner as in Example 24 except that Wiley Mill-like eucalyptus wood flour was prepared at a scale of 100 g in a glass vessel in place of the Wiley Mill-like (sawdust-like) *Pinus densiflora* wood flour, a hot water bath treatment was employed in place of the microwave treatment in the APA method treatment, a hot water bath treatment for 60 minutes was performed in place of the hot water bath treatment for 15 minutes, and squeezing was used for separating the treatment solution from the wood flour.

### Example 30

2092.6 mg of white lignin powder was obtained in the same manner as in Example 27 except that Phyllostachys edulis powder (produced in Kyushu, Fukuoka prefecture, triennial) was prepared at a scale of 100 g in a glass vessel in place of the *Pinus densiflora* wood flour, and spin-down was used for separating the treatment solution from the wood flour.

### Test Example 1-3. Measurement of whiteness

L*, a*, and b* of the white lignin powders obtained in Examples 1 to 17 were measured using a spectrophotometer (CM-R5 manufactured by Konica Minolta, Inc.). In addition, L*, a*, and b* of the white lignin powders obtained in Examples 6 to 17 were measured using a spectrophotometer (SPECTRO 1 manufactured by Variable Inc.). On the basis of the measured values, Hunter's whiteness (W) was calculated by the following formula: W = 100 - sqr [(100 - L*)^2 + ((a*)^2 + (b*)^2)]. The results are shown in Table 9.

**Table 9**

| | L* | a* | b* | W (Hunter's whiteness) |
|---|---|---|---|---|
| Example 1 | 81.3 | 0.8 | 18.4 | 73.8 |
| Example 2 | 93.3 | -1.4 | 132 | 85.1 |
| Example 3 | 94.2 | -1.7 | 12.7 | 86.0 |
| Example 4 | 89.3 | 0.6 | 11.8 | 84.0 |
| Example 5 | 79.8 | -1.9 | 12.9 | 75.9 |
| Example 6 | 94.3 | -1.5 | 13.3 | 85.4 |
| Example 7 | 83.9 | -1.0 | 14.0 | 78.7 |
| Example 8 | 83.6 | -2.0 | 8.5 | 81.4 |
| Example 9 | 84.0 | 3.1 | 8.1 | 81.8 |
| Example 10 | 85.8 | 2.8 | 10.8 | 81.9 |
| Example 11 | 81.3 | -0.4 | 92 | 79.2 |
| Example 12 | 78.4 | -1.3 | 5.6 | 77.6 |
| Example 13 | 79.9 | -0.1 | 8.5 | 78.2 |
| Example 14 | 87.9 | -1.4 | 5.1 | 86.8 |
| Example 15 | 84.1 | 2.8 | 17.3 | 76.3 |
| Example 16 | 71.6 | 4.6 | 6.6 | 70.5 |
| Example 17 | 85.3 | -1.2 | 10.5 | 81.9 |
| Example 18 | 93.3 | 0.1 | 10.8 | 87.3 |
| Example 19 | 87.6 | 3.4 | 14.9 | 80.3 |
| Example 20 | 91.5 | 1.2 | 8.2 | 88.1 |
| Example 21 | 90.0 | -2.4 | 14.7 | 82.1 |
| Example 22 | 88.9 | -0.9 | 19.2 | 77.8 |
| Example 23 | 90.6 | -0.6 | 16.1 | 81.3 |
| Example 24 | 93.6 | 0.6 | 7.5 | 90.1 |
| Example 25 | 93.7 | -0.5 | 8.7 | 89.2 |
| Example 26 - Lignin | 91.2 | -1.0 | 5.3 | 89.7 |
| Example 26-LCC | 78.7 | 8.9 | 19.1 | 70.0 |
| Example 27 | 56.0 | 5.1 | 13.0 | 53.8 |
| Example 28 | 91.8 | 0.8 | 12.3 | 85.2 |
| Example 29 | 89.6 | -0.6 | 92 | 86.1 |
| Example 30 | 69.2 | 0.0 | 24.4 | 60.7 |
| Example 31 - Lignin | 79.7 | 2.2 | 6.5 | 78.6 |
| Example 31-LCC | 77.4 | 7.5 | 14.0 | 72.4 |
| Example 32 | 80.4 | 8.0 | 19.5 | 71.2 |
| Example 33 | 80.4 | 3.1 | 11.4 | 77.1 |
| Example 34 - Lignin | 83.9 | 3.8 | 10.8 | 80.2 |
| Example 34 - LCC | 83.3 | 3.7 | 12.3 | 78.9 |
| Commercially available lignin (Tokyo Chemical Industry Co., Ltd.) | 21.3 | 5.2 | 6.3 | 20.9 |
| Commercially available lignin (Nacalai Tesque, Inc.) | 15.9 | 3.6 | 42 | 15.7 |

In addition, since the white lignin obtained in each Example was obtained by a method to which the Referential Test Examples 1 and 2 were applied, the white lignin has similar physical properties to those of the lignins obtained in Referential Test Examples 1 and 2 except for the color although there is some difference in solubility.

### Test Example 1-4. Measurement of lignin oxidation type ratio and content of β-O-4 ether type structure

For the white lignin powders of Examples, the content of the β-O-4 ether type structure was measured in accordance with the method described in Referential Test Examples. In addition, the lignin oxidation type ratio (ratio of oxidized lignin structures) was measured in accordance with the method described in Method for calculating oxidized lignin ratio in the section of "2. White lignin". The results are shown in Table 10 together with the measurement result of the whiteness W (Test Example 1-3) .

**Table 10**

| | Lignin oxidation type ratio | | Ether type content (%) | W (Hunter's whiteness) |
|---|---|---|---|---|
| | (G'/G) | (S'/S) | | |
| Example 2 | 0.10 | 0.10 | 59.4 | 85.1 |
| Example 3 | 0.10 | 0.11 | 69.8 | 86.0 |
| Example 6 | 0.04 | 0.04 | 65.9 | 85.4 |
| Example 8 | 0.13 | 0.14 | 64.1 | 81.4 |
| Example 9 | 0.08 | 0.11 | 62.3 | 81.8 |
| Example 10 | 0.04 | 0.18 | 75.1 | 81.9 |
| Example 13 | 0.17 | 0.23 | 55.1 | 78.2 |
| Example 14 | 0.08 | 0.19 | 59.1 | 86.8 |
| Example 12 | 0.00 | 0.07 | 70.0 | 77.6 |
| Example 18 | 0.13 | 0.07 | 95.0 | 87.3 |
| Example 20 | 0.01 | - | 65.2 | 88.1 |
| Example 34 - Lignin | 0.03 | - | 84.6 | 80.2 |
| Example 21 | 0.03 | 0.09 | 85.8 | 82.1 |
| Referential Example | 029 | 0.32 | 41.5 | ca. 60 |

| | | | | |
|---|---|---|---|---|
| *Referential Example (M-APA lignin): Lignin extracted by finely milling eucalyptus wood flour with a ball mill, and treating the material in an acetic acid solution containing 3% of peracetic acid with microwaves at 100°C for 10 minutes. The lignin is brown (whiteness is determined to be about 60 by color comparison). | | | | |

Ratio of oxidation types and ether binding content of white lignin (converted per 100 aromatic rings of lignin, and calculated from the ratio of the concerned moiety in the same spectrum in the 2D HSQC NMR spectrum).

### Test Example 1-5. Measurement of reflectance

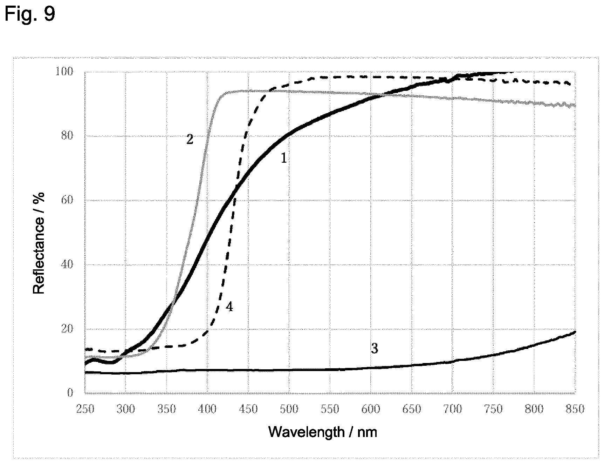

The reflectance of the white lignin powder of Example 29 was measured by a diffuse reflectance method using a spectrophotometer (UV-2700 manufactured by Shimadzu Corporation) and an integrating sphere unit (ISR-2600 manufactured by Shimadzu Corporation). A powdery sample was filled in a dedicated holder and measured. A baseline was acquired with barium sulfate (Nacalai Tesque, Inc.) and the scan speed was set to be medium. The reflection spectrum obtained is shown in Fig. 9.

2) (white) and 4) (light yellow) to be used in sunscreens have distinct absorption edges; 2) absorbs (i.e., does not reflect) light with wavelengths shorter than about 410 nm and 4) absorbs (i.e., does not reflect) light with wavelengths shorter than about 470 nm. On the other hand, 1) gently absorbs light from the visible region (about 600 nm) to the ultraviolet region. 4) absorbs light throughout the entire wavelength region and is dark brown. The gentle light absorption characteristics in the visible to UV-A region of a white lignin powder are useful as a cosmetic material also in that the user does not recognize unnaturalness such as white masking which is a problem with inorganic light scattering agents such as titanium oxide.

### Test Example 1-6. Measurement of infrared absorption spectrum

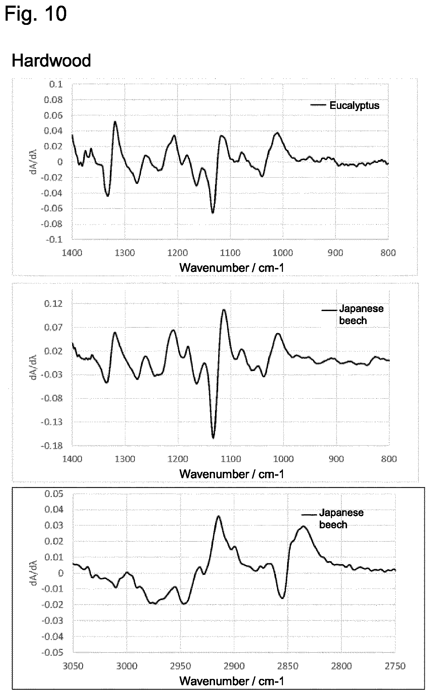

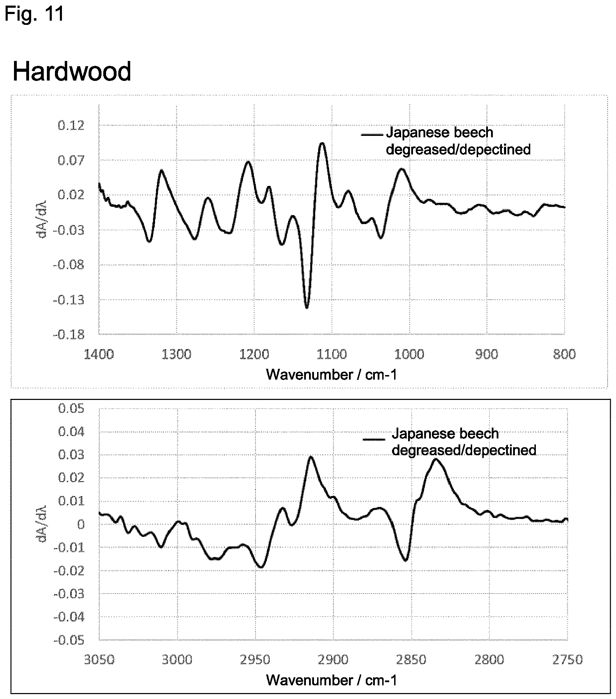

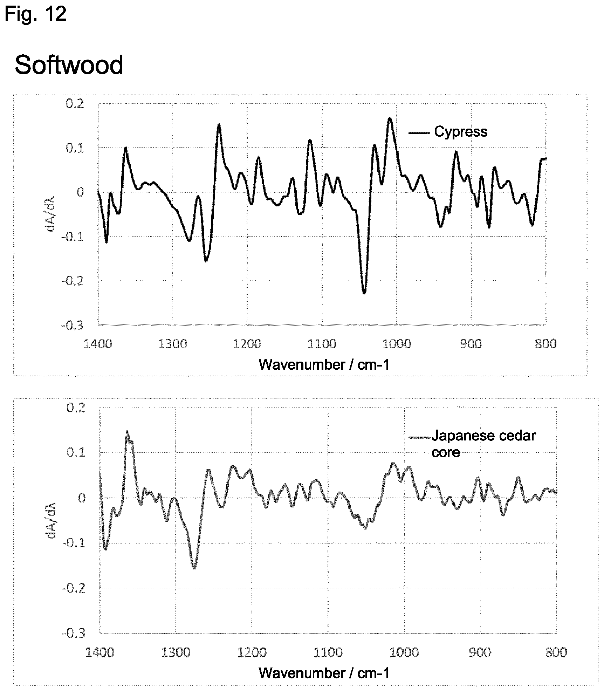

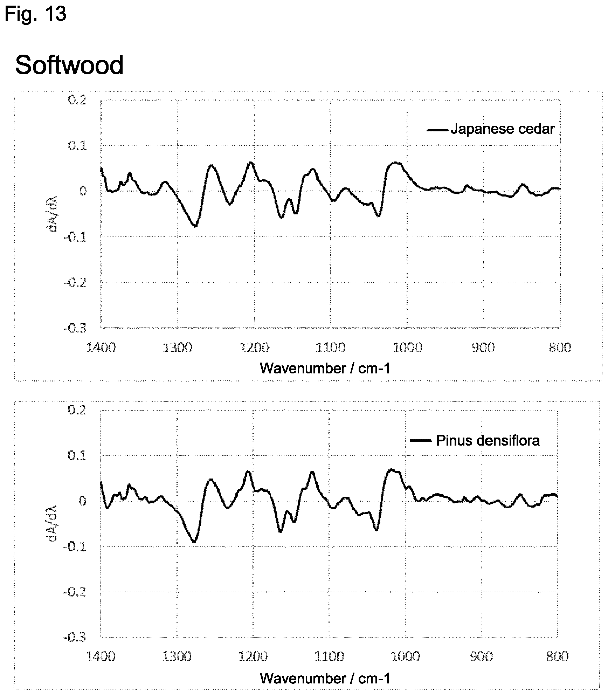

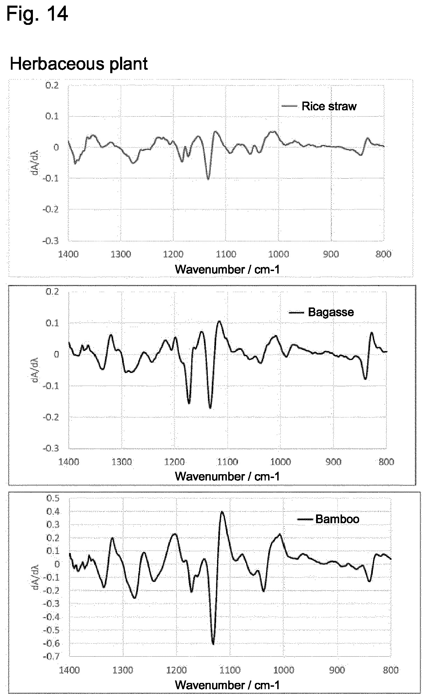

For FT-IR measurement of the white lignin powders of Examples, an FT-IR spectrometer Spectrum Two Diamond ATR manufactured by PerkinElmer Inc. was used. The measurement range was 400 to 4000 cm⁻¹, and the number of scans was 10. The absorbance at 1800 cm⁻¹ was defined as 0, the absorbance at 619 cm⁻¹ was defined as 1, and the normalized absorbance was further differentiated. The differential spectra obtained are shown in Figs. 10 to 14.

### Test Example 2. Production of white lignin and white lignin-polysaccharide complex

White lignin and a white lignin-polysaccharide complex were produced by alkali-treating a biomass, washing the resulting alkali-treated material with a liquid, and treating the washed material by an APA method. Specifically, the isolation was performed as described below.

### Test Example 2-1: Preparation of finely milled wood flour

Hardwood (eucalyptus) and softwood (cypress) were obtained by powdering wood chips with a Wiley mill (Yoshida Mfg., Ltd., Model 1029-D). For eucalyptus, a Wiley mill powder was further ground with a mixer mill. As bamboo, Phyllostachys edulis powder (produced in Kyushu, Fukuoka prefecture, triennial) was used.

### Test Example 2-2. Preparation of wood flour

1 g of wood flour of hardwood (eucalyptus) was placed in each of the left and right two pots of a mixer mill (MM301, Retsch). Under the conditions of a grinding time of 5 minutes and a frequency of 1/15 sec, milling was performed, thereby affording a powder (wood flour) with a volume average particle size of 0.1 mm.

### Test Example 2-3. Extraction of white lignin

As a starting material, the wood flour obtained in Test Example 2-1 or 2-2 was used. A 0.25M sodium hydroxide solution was prepared (1 M was diluted 4 times) . 14.4 mL of the 0.25 M sodium hydroxide solution was added to 1.8 g of wood flour, and the mixture was irradiated with ultrasonic waves using an ultrasonic cleaner (MCD-10P manufactured by AS ONE Corporation). The frequency was 28 kHz, and the irradiation time was 30 minutes. During the irradiation, the water in the cleaning tank was cooled with an immersion cooler (ECS-0 manufactured by Tokyo Rikakikai Co., Ltd.) in order to control increase in water temperature.

After the ultrasonic treatment, the solution and the wood flour were separated by filtration, and the wood flour was washed with pure water. The wood flour washed with water and 14.4 mL of acetic acid (special grade, manufactured by FUJIFILM Wako Pure Chemical Corporation) or an acetic acid-hydrogen peroxide water mixed solution (manufactured by Santoku Chemical Industries Co., Ltd., 31% hydrogen peroxide water (specific gravity: 1.11): 0.294 mL = 0.612% = 0.2 M, acetic acid: 14.106 mL) were placed in an Initiator vial, and irradiated with microwaves for 10 minutes at 50°C, initial power of 400 W, and stirring speed of 600 to 900 rpm with an Initiator EXP microwave synthesizer manufactured by Biotage. After the microwave treatment, the wood flour and the solution were separated by filtration, and the wood flour was washed three times with 14.4 mL of a 70% (v/v) aqueous ethanol solution. The filtered solution and the washings were combined, and the solvent was removed with a rotary evaporator. When an acetic acid odor was emitted from the resulting dried solid, a 70% (v/v) aqueous ethanol solution was added thereto, washing was performed, and the solvent was evaporated with an evaporator to dryness. The dried solid thus obtained is defined as "white lignin". As necessary, the dried solid was dissolved in an 80% (v/v) aqueous dioxane solution (dioxane: manufactured by FUJIFILM Wako Pure Chemical Corporation), and the solution was frozen in liquid nitrogen and then freeze-dried.

In this test example, the atmosphere was normal pressure unless otherwise specified, and when it is described as pressurized, the sample was sealed in an Initiator vial, and then air was introduced with a syringe from the septum on the upper part of the vial. The pressure in the vessel after sealing was 2.25 bar.

In the case of heating and stirring instead of the microwave treatment described above, the heating was performed with a hot stirrer. The Initiator vial containing a sample was placed on a heat block, and the heat block was heated with the hot stirrer, affording a required extraction temperature.

### Test Example 2-4. Extraction of white lignin-polysaccharide complex (LCC)

The wood flour after the acetic acid solution treatment of Test Example 2-3 was collected, and 14.4 mL of acetic acid (special grade, manufactured by FUJIFILM Wako Pure Chemical Corporation) or an acetic acid-hydrogen peroxide water mixed solution (manufactured by Santoku Chemical Industries Co., Ltd., 31% hydrogen peroxide water: 0.1294 mL, acetic acid: 14.106 mL) was placed in an Initiator vial, and irradiated with microwaves for 1 minute or 10 minutes at 120 to 140°C, initial power of 400 W, and stirring speed of 600 to 900 rpm with an Initiator EXP microwave synthesizer manufactured by Biotage. The soluble part is subjected to a microwave treatment. Then, the wood flour and the solution are separated by filtration, and the wood flour is washed three times with 14.4 mL of a 70% (v/v) aqueous ethanol solution. The filtered solution and the washings were combined, and the solvent was removed with a rotary evaporator. When an acetic acid odor was emitted from the resulting dried solid, a 70% (v/v) aqueous ethanol solution was added thereto, washing was performed, and the solvent was evaporated with an evaporator to dryness. The dried solid thus obtained is defined as "white LCC". As necessary, the dried solid was dissolved in an 80% (v/v) aqueous dioxane solution, and the solution was frozen in liquid nitrogen and then freeze-dried.

In this test example, the atmosphere was in the air unless otherwise specified, and when the atmosphere was described to be an argon atmosphere, the inside of the Initiator vial containing a sample was purged with argon gas before the microwave treatment, and then sealed.

In the case of heating and stirring instead of the microwave treatment described above, the heating was performed with a hot stirrer. The Initiator vial containing a sample was placed on a heat block, and the heat block was heated with the hot stirrer, affording a required extraction temperature.

The whiteness of the white lignin (Test Example 2-3) and the whiteness of the white lignin-polysaccharide complex (white LCC: Test Example 2-4) are shown in Table 9. The measurement method is as in Test Example 1.

Ratio of oxidation types and ether binding content of white lignin (converted per 100 aromatic rings of lignin, and calculated from the ratio of the concerned moiety in the same spectrum in the 2D HSQC NMR spectrum).

### Example 31

39.3 mg of white lignin powder was obtained in the same manner as in Example 9 except that filtration was employed for separation of the treatment solution from the wood flour.

In addition, 279.2 mg of white LCC powder was obtained in the same manner as in Example 26 except that an acetic acid stock solution (17.5 M) was used in place of the acetic acid-hydrogen peroxide-containing solution in the treatment at 140°C of the wood flour after the AAPA treatment.

### Example 32

51.3 mg of white lignin powder and 259.79 mg of white LCC powder were obtained in the same manner as in Example 31 except that in the APA treatment, an acetic acid-hydrogen peroxide-containing solution was used in place of the acetic acid stock solution (17.5 M), and a microwave treatment at 140°C for 1 minute was performed in place of the microwave treatment at 140°C for 10 minutes.

### Example 33

59.1 mg of white lignin powder and 49.9 mg of white LCC powder were obtained in the same manner as in Example 31 except that Phyllostachys edulis powder (produced in Kyushu, Fukuoka prefecture, triennial) was used in place of the Wiley Mill-like (sawdust-like) eucalyptus wood flour, and in the APA treatment, the atmosphere was replaced with argon gas and a microwave treatment at 120°C for 1 minute was performed in place of the microwave treatment at 140°C for 10 minutes.

### Example 34

67.7 mg of white lignin powder and 29.6 mg of white LCC powder were obtained in the same manner as in Example 31 except that cypress wood flour was used in place of the Wiley Mill-like (sawdust-like) eucalyptus wood flour, and in the APA treatment, the atmosphere was replaced with argon gas and a microwave treatment at 130°C for 1 minute was performed in place of the microwave treatment at 140°C for 10 minutes.

### Test Example 3. Production of self-assembled body (hollow spherical particles)

A white lignin sample was dissolved in DMSO to form a 10 w/v% DMSO solution, and water as a poor solvent was gradually added to prepare fine particles. Dispersion treatment by ultrasonic irradiation was performed for the dissolution. An NMR measurement sample was prepared using a solvent having DMSO-d₆ : Ethanol-d₆ : D₂O being 1 : 1 : 8. In the experiments for incorporation of a drug, a dye, or the like, a compound to be incorporated was dissolved in DMSO or ethanol in advance, and the resulting solution was mixed with white lignin or white LCC, and then fine particles were prepared by the same method as described above. The measurement results of the particle size, etc. are shown in Table 11.

**Table 11**

| | Raw material species of white lignin | Mode diameter (DLS) | Median diameter (DLS) | Mode diameter (qNano) | Median diameter (qNano) | ζ-Potential (mV) |
|---|---|---|---|---|---|---|
| Example 15 | Japanese cedar | 66 | 66 | | | -85 |
| Example 20 | Pinus densiflora | 116 | 112 | | | -62 |
| Example 27 | Cypress | 206 | 206 | 273 | 306 | |
| Example 18 | Japanese beech | 44 | 44 | | | -90 |
| Example 28 | Japanese beech (*1) | 54 | 53 | | | -76 |
| Example 29 | Eucalyptus | 139 | 135 | | | |
| Example 31 - Lignin | Eucalyptus (external heating process) | | | 229 | 266 | |
| Example 26 - Lignin | Eucalyptus LCC | 312 | 301 | 277 | 300 | |
| Example 22 | Rice straw | 90 | 90 | | | -91 |
| Example 23 | Bagasse | 73 | 73 | | | -99 |
| Example 30 | Bamboo | 248 | 248 | 266 | 288 | |

| | | | | | | |
|---|---|---|---|---|---|---|
| *1 Prepared from a sample from which extraction components of a raw material have been removed. | | | | | | |

### Test Example 4. Solubility measurement

An NMR-DMSO-based solubility index was calculated. A lignin sample is dissolved in DMSO-d6 at a concentration of 2 w/v%, quantitative 1H NMR measurement is performed, and then normalization is performed where the integrated value (6 to 8 ppm) of the NMR spectrum aromatic region is 100. Dissolution and measurement were performed under the same conditions. The integrated values of the spectra of the sample dissolved in deuterated acetic acid and deuterated ethanol were normalized on the basis of the deuterated DMSO condition, and the indexes were calculated. The measurement temperature was 313 K for the deuterated DMSO solvent and 298 K for the others.
White lignin (derived from bamboo) had an index of 115 in deuterated acetic acid and an index of 68 in deuterated ethanol. White lignin (from eucalyptus) had an index of 104 in deuterated acetic acid and an index of 60 or higher in deuterated ethanol. On the other hand, eucalyptus MWL (milled lignin) had an index of 27 in deuterated acetic acid and an index of 20 or less in deuterated ethanol.
Japanese cedar MWL (milled lignin) had an index of 41 in deuterated acetic acid and an index of 25 or less in deuterated ethanol.

## Claims

1. A method for producing white lignin or a white lignin-polysaccharide complex, comprising:
(a) a step of bringing a plant biomass into contact with an alkaline solution to obtain an alkali-treated material;
(b) a step of washing the alkali-treated material with a liquid to obtain a washed material; and
(c) a step of bringing a solution containing an organic acid into contact with the washed material.

2. The method according to claim 1, wherein the organic acid solution contains a peracid.

3. The method according to claim 1 or 2, wherein the alkaline solution is at 70°C or lower.

4. The method according to any one of claims 1 to 3, comprising irradiating the plant biomass with ultrasonic waves or microwaves in the step (a).

5. The method according to any one of claims 1 to 4, wherein the liquid contains water.

6. The method according to any one of claims 1 to 4, wherein the organic acid solution is at 60°C or lower.

7. The method according to any one of claims 1 to 6, comprising irradiating the washed material with ultrasonic waves or microwaves in the step (c).

8. The method according to any one of claims 1 to 7, comprising (d) a step of adding a first solvent after the step (c) to obtain a solution containing white lignin or a white lignin-polysaccharide complex.

9. The method of claim 8, comprising (e) a step of adding a second solvent to a concentrate of the solution containing the white lignin and/or the white lignin-polysaccharide complex to extract the white lignin.

10. The method according to any one of claims 1 to 9, wherein the white lignin and/or the white lignin-polysaccharide complex has a Hunter's whiteness (W) of 60 or greater.

11. The method according to any one of claims 1 to 10, wherein the organic acid solution is at 100°C or lower, the method comprising a step of obtaining a white lignin-containing solution.

12. The method according to any one of claims 1 to 10, wherein the organic acid solution is above 100°C and the method comprises a step of obtaining a white lignin-polysaccharide complex-containing solution.

13. White lignin having a Hunter's whiteness (W) of 60 or more and a content of a β-O-4 ether type structure of 50% or more.

14. White lignin obtainable by the method according to claim 11.

15. White lignin having a Hunter's whiteness (W) of 60 or more and a ratio of oxidized lignin structures of 0.3 or less.

16. A white lignin-polysaccharide complex having a Hunter's whiteness (W) of 60 or more and containing at least one bond selected from the group consisting of an α-ether bond between lignin and a polysaccharide, an α-ester bond between lignin and a polysaccharide, and a γ-ester bond between lignin and a polysaccharide.

17. White lignin having 6 or more, desirably 8 or more, more desirably 10 or more, and particularly desirably 12 or more peaks in total among peaks in a first derivative spectrum of an infrared absorption spectrum with hardwood, **characterized by** having positive peaks (convex upward) at 1007 to 1017 cm-, 1072 to 1082 cm⁻¹, 1108 to 1118 cm⁻¹, 1148 to 1154 cm⁻¹, 1179 to 1183 cm⁻¹, 1204 to 1210 cm⁻¹, 1257 to 1265 cm⁻¹, 1317 to 1321 cm⁻¹, and 2893 to 2921 cm⁻¹ and negative peaks (convex downward) at 1035 to 1041 cm⁻¹, 1130 to 1134 cm⁻¹, 1160 to 1167 cm⁻¹, and 1331 to 1337 cm⁻¹.

18. White lignin having 4 or more, desirably 6 or more, more desirably 8 or more, and particularly desirably 10 or more peaks in total among peaks in a first derivative spectrum of an infrared absorption spectrum with softwood, **characterized by** having positive peaks (convex upward) at 1010 to 1035 cm⁻¹, 1070 to 1088 cm⁻¹, 1112 to 1126 cm⁻¹, 1198 to 1212 cm⁻¹, 1250 to 1261 cm⁻¹, and 1360 to 1365 cm⁻¹ and negative peaks (convex downward) at 1033 to 1047 cm⁻¹, 1144 to 1148 cm⁻¹, 1161 to 1171 cm⁻¹, 1226 to 1244 cm⁻¹, and 1270 to 1290 cm⁻¹.

19. White lignin having 3 or more, desirably 4 or more peaks, and more desirably 5 or more peaks in total among peaks in a first derivative spectrum of an infrared absorption spectrum with herbaceous plants, **characterized by** having positive peaks (convex upward) at 1005 to 1011 cm⁻¹, 1055 to 1072 cm⁻¹, 1072 to 1082 cm⁻¹, and 1109 to 1126 cm⁻¹ and negative peaks (convex downward) at 1030 to 1041 cm⁻¹ and 1128 to 1136 cm⁻¹.

20. White lignin or a white lignin-polysaccharide complex soluble in deuterated acetic acid having an NMR-DMSO-based solubility index of 50 or more, preferably 60 or more, more preferably 80 or more, and more desirably 100 or more, or
white lignin or a white lignin-polysaccharide complex soluble in deuterated ethanol having an NMR-DMSO-based solubility index of 30 or more, preferably 40 or more, more preferably 50 or more, and more desirably 60 or more.

21. A white lignin-polysaccharide complex obtainable by the method according to claim 12.

22. A self-assembled body of the white lignin according to any one of claims 13 to 15 and 17 to 20 and/or the white lignin-polysaccharide complex according to any one of claims 17 and 20 to 21.

23. The self-assembled body according to claim 22, wherein the self-assembled body is hollow spherical particles.

24. The self-assembled body according to claim 22, wherein the self-assembled body is fine particles having an average particle size of from 30 nm to 5000 nm, particularly nanoparticles having an average particle size of from 40 nm to 500 nm.

25. The self-assembled body according to claim 22, wherein the fine particle has anti-Stokes fluorescence.

26. Fine particles being the self-assembled body according to claim 22, wherein the fine particles are dispersible in water and have a zeta potential having a large absolute value (-20 mV or higher, especially from -60 mV to -100 mV).

27. White lignin, a white lignin-polysaccharide complex, and/or a self-assembled body that contribute to use for reflection, absorption, scattering agent, or the like of ultraviolet rays.
